(19) Europäisches Patentamt
European Patent Office
Office européen des brevets

(11) **EP 4 578 626 A1**

(12) **EUROPEAN PATENT APPLICATION**
published in accordance with Art. 153(4) EPC

(43) Date of publication:
**02.07.2025 Bulletin 2025/27**

(21) Application number: **22956549.4**

(22) Date of filing: **26.08.2022**

(51) International Patent Classification (IPC):
***B29C 48/275*** (2019.01)

(52) Cooperative Patent Classification (CPC):
**B29B 7/38; B29B 7/72; B29B 9/06; B29C 48/275;
B29C 48/92; C08J 11/06;** Y02W 30/62

(86) International application number:
**PCT/JP2022/032273**

(87) International publication number:
**WO 2024/042723 (29.02.2024 Gazette 2024/09)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicants:
• **artience Co., Ltd.**
**Tokyo 104-8377 (JP)**
• **Toyo Ink Co., Ltd.**
**Tokyo 104-8378 (JP)**

(72) Inventors:
• **SUZUKI, Yuya**
**Tokyo 104-8378 (JP)**
• **MAJIMA, Yuki**
**Tokyo 104-8378 (JP)**

(74) Representative: **SSM Sandmair
Patentanwälte Rechtsanwalt
Partnerschaft mbB
Joseph-Wild-Straße 20
81829 München (DE)**

(54) **METHOD FOR MANUFACTURING RECYCLED PLASTIC**

(57) Provided is a method for manufacturing recycled plastic (B) from a plastic laminate (A) using an extrusion device having a melting and kneading unit in which a screw is disposed and an ejection unit. The method includes: supplying a plastic laminate (A) to the melting and kneading unit of the extrusion device; melting and kneading the plastic laminate (A) supplied to the melting and kneading unit with a screw rotation number 50 to 900 RPM to form a recycled resin composition (a); and ejecting the recycled resin composition (a) from the ejection unit and cooling the same to obtain recycled plastic (B). The plastic laminate (A) has at least a first resin layer, an adhesive layer and/or a printing layer, and a second resin layer. The content of a polyolefin resin is 80 mass% or more with a total mass of the plastic laminate (A) as a reference.

EP 4 578 626 A1

## Description

Technical Field

One embodiment of the present invention relates to a manufacturing method of recycled plastic that performs material recycling from a laminate containing polyolefin resin.

Background Art

In recent years, environmental pollution caused by the disposal and dumping of plastic products has become a concern, and there is an increasing demand for recycling plastic products. Among plastic products, plastic film packaging materials generally have a multilayer structure to meet different performance requirements for each application. For example, food packaging packages are composed of a laminated material formed by bonding a first film substrate having a printing layer formed by printing printing ink thereon with a second film substrate via an adhesive layer as needed, and this laminate is cut and heat-sealed to be processed into the shape of a package. In such laminated materials represented by food packaging packages, various plastic substrates such as polyester substrates, nylon substrates (NY), polypropylene substrates (PP), and polyethylene substrates (PE) are used as film substrates. Thus, there is a demand for material recycling of laminated materials.

However, laminated materials have a multilayer structure containing multiple heterogeneous materials, making material recycling difficult due to compatibility and other issues. As a result, despite the desire for material recycling, the reality is that they are sometimes disposed of as waste.

In response to this, studies are progressing towards material recycling of laminated materials such as food packaging packages.

For example, Patent Document 1 discloses a method in which impurities contained in a package are removed, the package is crushed, and then separated after being subjected to an alkali treatment or the like as necessary, and the raw materials recovered and separated according to their specific gravity are melted and formed into pellets. The obtained pellets may be secondary processed to form new products. However, according to the disclosed method, since most of the printing layer contained in the package remains in the recovered raw materials without being removed, the recycled materials such as pellets tend to be of inferior quality.

In addition, Patent Documents 2 and 3 disclose methods of providing a removable primer layer or a removable printing layer on a plastic substrate, and separating or detaching these layers along with the packaging material provided thereon from the plastic substrate to remove them. However, according to the disclosed methods, the process related to the above-mentioned separation or detachment increases with recycling, which may lead to an increase in the time until recycling is completed and the amount of manual work, potentially resulting in a decrease in production volume.

Citation List

Patent Document

Patent Document 1: Japanese Patent Application Laid-Open (JP-A) No. 2014-19003.
Patent Document 2: Japanese Patent Application Laid-Open (JP-A) No. 2001-031899.
Patent Document 3: Japanese Patent Application Laid-Open (JP-A) No. 2020-196855.

SUMMARY

Technical Problem

As described above, the method of separating or detaching layers other than the plastic substrate for recycling the laminate may not be considered fully satisfactory in terms of workability and quality of recycled materials, and further investigation is necessary. However, typically, layers other than the plastic substrate contained in the laminate, such as the printing layer and/or adhesive layer, become foreign matter. Thus, in the case of melt kneading the laminate without performing the process of separating or detaching layers other than the plastic substrate, the recycled materials such as pellets tend to decrease in quality due to foreign matter. In addition, the above-mentioned foreign matter may also cause undesirable burning in the recycled resin in the case of continuous melt kneading (during long-run recycling).

From the above-mentioned perspective, for the material recycling of laminates, a method is desired that may obtain high-quality recycled plastic simply and efficiently without performing the process of separating or detaching other layers from the plastic substrate.

Thus, in view of the above-mentioned situation, the present invention provides a method for manufacturing high-quality recycled plastic using the laminate itself as a raw material. In particular, the present invention provides a method for manufacturing high-quality recycled plastic that is adaptable to long-run recycling, suppresses the occurrence of burning, and possesses excellent moldability.

Solution to Problem

As a result of intensive research on the composition of the laminate used as a raw material and various conditions during processing such as melting and kneading, the inventors of the present invention have found that the above-mentioned problems may be solved by the method for manufacturing recycled plastic described below, thus completing the present invention.

In other words, the present invention relates to the embodiments described below. However, the present invention is not limited to the following embodiments.

A manufacturing method for recycled plastic, comprising: supplying a plastic laminate (A) to the melting and kneading unit of the extrusion device;

> melting and kneading the plastic laminate (A) supplied to the melting and kneading unit with a screw rotation number 50 to 900 RPM to form a recycled resin composition (a); and
>
> ejecting the recycled resin composition (a) from the ejection unit and cooling the recycled resin composition (a) to obtain recycled plastic (B),
> wherein the plastic laminate (A) has at least a first resin layer, an adhesive layer and/or a printing layer, and a second resin layer, and a content of a polyolefin resin is 80 mass% or more with a total mass of the plastic laminate (A) as a reference.

[2] The manufacturing method for recycled plastic according to [1], wherein an ejection of the recycled resin composition (a) is performed at an ejection pressure of 18 MPa or less.

[3] The manufacturing method for recycled plastic according to [1] or [2], wherein the melting and kneading are performed in a presence of an antioxidant.

[4] The manufacturing method for recycled plastic according to any one of [1] to [3], wherein a water content included in the plastic laminate (A) is 3 mass% or less with a total mass of the plastic laminate (A) as a reference.

[5] The manufacturing method for recycled plastic according to any one of [1] to [4], wherein the adhesive layer contains a reaction product of a reactive urethane adhesive composed of a polyisocyanate and a polyol.

[6] The manufacturing method for recycled plastic according to any one of [1] to [5], wherein a chlorine content ratio in the plastic laminate (A) is 0.3 mass% or less with a total mass of the plastic laminate (A) as a reference.

[7] The manufacturing method for recycled plastic according to any one of [1] to [6], wherein a melt mass flow rate of the plastic laminate (A) is 0.5 to 15 g/10 min.

[8] The manufacturing method for recycled plastic according to any one of [1] to [7], wherein the printing layer contains a pigment and a binder resin, and a chlorine content ratio in the binder resin is 5 mass% or less with a total mass of the binder resin as a reference.

[9] The manufacturing method for recycled plastic according to [8], wherein a content ratio of a pigment in the printing layer is 30 mass% or less with a total mass of the printing layer as a reference.

[10] The manufacturing method for recycled plastic according to any one of [1] to [9], wherein a polyolefin resin contained in the plastic laminate (A) contains at least one selected from a group consisting of polyethylene resin and polypropylene resin.

[11] The manufacturing method for recycled plastic according to any one of [1] to [11], wherein the plastic laminate (A) further comprises a barrier layer.

[12] A manufacturing method for recycled plastic molded article, comprising: manufacturing a recycled plastic by a manufacturing method for recycled plastic according to any one of [1] to [11]; and molding and processing the recycled plastic.

Effects of Invention

The present invention may provide a method for manufacturing high-quality recycled plastic using plastic laminate as a raw material. This method is particularly adaptable to long-run recycling, may suppress the occurrence of burning, and may manufacture high-quality recycled plastic with excellent moldability. Thus, according to the present invention, material recycling may be performed simply and efficiently without conducting a process of separating or detaching the printing layer and other layers from the plastic substrate of the plastic laminate.

DESCRIPTION OF EMBODIMENTS

The following describes in detail embodiments of the present invention, but the description of the embodiments or requirements mentioned is an example of embodiments of the present invention, and the present invention is not limited to these contents as it is within the spirit of the present invention.

<1>Manufacturing Method for Recycled Plastic

One embodiment of the present invention relates to a method for manufacturing recycled plastic (B) from plastic laminate (A) using an extrusion device.

The plastic laminate (A) used in the above-mentioned manufacturing method is the main raw material for recycled plastic and contains polyolefin resin. The plastic laminate (A) includes at least a first resin layer, an adhesive layer and/or a printing layer, and a second resin layer. In the present invention, the plastic laminate (A) may be abbreviated as simply "laminate (A)", but they are synonymous. A more specific configuration of the plastic laminate (A) is described later.

The above-mentioned plastic laminate (A) has a multilayer structure including at least a layer such as a substrate using polyolefin resin, and is characterized in that the content of polyolefin resin is 80 mass% or more with the total mass of the above-mentioned plastic laminate (A) as the reference. Here, the content of polyolefin resin may be calculated by the following Formula (1).

(Mass of polyolefin resin in plastic laminate (A))/(Mass of plastic laminate (A)) $\times$ 100          Formula (1):

<1-1>Extrusion device

The extrusion device used in the above-mentioned manufacturing method may be any device that is generally capable of melting and kneading a material such as a thermoplastic resin and then extruding the material. For example, a known extrusion device (resin composition molding machine) as described in Japanese Patent Application Laid-Open Publication No. 2017-148997 may be used. According to the above-mentioned resin composition molding machine, the extrusion device may include a feed port for supplying materials such as thermoplastic resins, a melting and kneading unit for melting and kneading the materials supplied from the above-mentioned feed port, and an ejection unit for ejecting the materials melted and kneaded in the above-mentioned melting and kneading unit.

In one embodiment, the manufacturing method according to the present invention may preferably use an extrusion device having a melting and kneading unit provided with a cylinder in which a screw is disposed internally, and an ejection unit provided at the tip end portion of the cylinder. The cylinder may be provided with a feed port such as a hopper for supplying materials. Further, it is preferable that a screen mesh is provided inside the cylinder on the tip end portion side of the screw.

In the above-mentioned extrusion device, the melting and kneading unit may be composed of at least a cylinder, a screw disposed inside the cylinder, and a heating source such as an electric heater. In the melting and kneading unit, shear heat is generated from the above-mentioned material itself due to the shearing action caused by the rotation of the screw disposed inside the cylinder, and the heating from sources such as electric heaters, and the melting and kneading of the material is performed.

The material melted and kneaded in the melting and kneading unit of the above-mentioned extrusion device passes through a screen mesh installed as necessary and is ejected from the above-mentioned ejection unit. A die having a predetermined shape may be provided in the ejection unit. The material ejected from the ejection unit solidifies or loses fluidity by cooling and becomes recycled material. In the case of manufacturing pellets as recycled material, the extrusion device may be provided with a pelletizer that cuts the material ejected from the ejection unit into predetermined lengths. Furthermore, it may be provided with a cooling unit for performing cooling.

In the above-mentioned extrusion device, the form of the screw is not particularly limited. For example, it may have a known structure such as a single-screw extruder, a twin-screw extruder, and a rotor-type twin-screw kneader.

In one embodiment, the screw diameter is preferably 25 to 400 mm, more preferably 50 to 300 mm, and even more preferably 100 to 250 mm. In the case where the screw diameter is within the above range, it is favorable from the viewpoint of shear heat and kneading efficiency, and recycled plastic with a small number of foreign substances may be easily obtained.

The effective screw length (L/D) is preferably 15 to 45, more preferably 20 to 40, and even more preferably 25 to 35. In the case where the effective screw length (L/D) is within the above range, it is favorable from the viewpoint of kneading efficiency and kneading time, and recycled plastic with a small number of foreign substances and less burning may be easily obtained. It is noted that, in the effective screw length (L/D), L represents the screw length, and D represents the screw diameter.

The cylinder diameter is larger than the screw diameter, and typically, there exists a gap between the two. The size of this gap is preferably 0.01 to 1 mm, preferably 0.05 to 0.7 mm, and even more preferably 0.1 to 0.5 mm. In the case where the above-mentioned gap is within the above range, it is favorable from the viewpoint of shear heat and kneading efficiency, and recycled plastic with a small number of foreign substances may be easily obtained.

The compression ratio of the screw is preferably 2 to 5, more preferably 2.5 to 4.5, and even more preferably 3.4 to 3.7. In the case where the above-mentioned compression ratio is within the above range, it is favorable from the viewpoint of shear heat and kneading efficiency, and recycled plastic with a small number of foreign substances may be easily obtained. It is noted that the screw compression ratio refers to the ratio of the volume (V1) per pitch of the screw groove near the feed unit of the plastic laminate to the volume (V2) per pitch of the screw groove near the ejection unit, as shown in the following Formula (2).

$$\text{Formula (2): Screw compression ratio} = V1/V2$$

The material constituting the screw is not particularly limited, and known materials may be used. From the viewpoint of preventing foreign substance contamination due to wear, it is preferable that the screw is constructed using stainless steel. Further, various treatments may be applied to the surface of the screw. For example, nitriding treatment, quenching treatment, and powder metal quenching treatment may be mentioned. From the viewpoint of wear prevention, it is preferable to apply powder metal quenching treatment. As a combination of the constituent material of the screw and the surface treatment, a form in which powder metal quenching treatment is applied to stainless steel is more preferable.

<1-2> Manufacturing process of recycled plastic (B)

The manufacturing method of the recycled plastic (B) of the above-mentioned embodiment relates to a method for manufacturing recycled plastic (B) from plastic laminate (A) using an extrusion device having a melting and kneading unit in which a screw is disposed and an ejection unit, and includes

a process of supplying a plastic laminate (A) to the melting and kneading unit of the extrusion device;
a process of melting and kneading the plastic laminate (A) supplied to the above-mentioned melting and kneading unit with a screw rotation number 50 to 900 RPM to form a recycled resin composition (a); and
a process of ejecting the recycled resin composition (a) from the above-mentioned ejection unit and cooling the recycled resin composition (a) to obtain recycled plastic (B).

As described above, according to the manufacturing method of the present embodiment, recycled plastic (B) may be obtained as a recycled material by processing the laminate (A) under predetermined conditions. The above-mentioned processing includes a process of heating, melting and kneading the laminate (A), and a process of extruding (ejecting) the same. In one embodiment, it is preferable that the laminate (A) is in a form that has been subdivided by cutting or crushing. To subdivide the laminate (A), methods such as crushing may be applied.

Further, it is preferable that the laminate (A) is washed. Furthermore, it is preferable that the laminate (A) is dehydrated and dried after washing.

From these perspectives, the manufacturing method of this embodiment may further include processes such as crushing, washing, dehydration, and drying in addition to the above-mentioned processing steps. The details of each process are described below.

(Crushing)

Crushing is effective as a method to reduce (subdivide) the dimensions of the laminate (A). The crushing method is not particularly limited. For example, as a crushing method, methods using a jaw crusher, impact crusher, cutter mill, stamp mill, ring mill, roller mill, jet mill, or hammer mill may be applied.

The size of the subdivided laminate (A) preferably has a length of one side from 1 mm to 50 mm, more preferably from 3 mm to 40 mm, and even more preferably from 5 mm to 30 mm. In the case where the shape of the laminate (A) is subdivided to a size of 1 to 50 mm, the efficiency of washing, dehydration and drying processes is improved due to the increased surface area, and the uniformity of the molten resin is promoted, making it possible to easily obtain high-quality recycled plastic.

(Washing)

It is preferable that the laminate (A), or the subdivided laminate (A), is washed. Washing methods include batch type, continuous type, etc. Water, detergent, neutralizing agent, or alkaline aqueous solution may be used for washing.

(Dehydration, Drying)

It is preferable to further dehydrate and dry the washed laminate (A). A centrifugal dehydration method is suitable as the dehydration method. A hot air drying method is suitable as the drying method. By performing the dehydration and drying process, the water content in the laminate (A) may be easily adjusted. By adjusting the water content in the laminate (A), foaming during the manufacturing of recycled plastic such as pellets may be easily avoided. In the case where bubbles occur during pellet manufacturing, the pressure in the cylinder changes, and the extrusion amount and extrusion pressure do not become constant, which may result in irregular shape and dimensions of the pellets. Further, when manufacturing molded products by secondary molding using the manufactured pellets, unevenness is likely to occur on the surface, and there is a risk of deterioration in the surface condition of the molded products.

From this perspective, the water content in the laminate (A) is preferably 3 mass% or less, more preferably 2 mass% or less, even more preferably 1 mass% or less, and particularly preferably 0.5 mass% or less, with the total mass of the laminate (A) as a reference. In one embodiment, it is preferable that the above-mentioned manufacturing method includes a drying process for adjusting the water content in the laminate (A) to within the above range, regardless of the process of washing the laminate (A).

(Processing)

The laminate (A) is heated, melted, and kneaded in an extrusion device provided with a screw to form a recycled resin composition (a). Subsequently, the recycled resin composition (a) is solidified or its fluidity is reduced by cooling to form a recycled plastic (B).

As a more specific process for manufacturing the recycled plastic (B), it is preferable to include, for example, a process of supplying the laminate (A) from a feed port to a melting and kneading unit, a process of melting and kneading the laminate (A) supplied from the above-mentioned feed port to the melting and kneading unit to form a recycled resin composition (a), a process of ejecting the recycled resin composition (a) melted and kneaded in the above-mentioned melting and kneading unit from an ejection unit, and a process of cooling the recycled resin composition (a) ejected from the ejection unit to obtain the recycled plastic (B). The recycled plastic (B) may be manufactured as a primary molded product of the recycled resin composition, and the shape thereof is not particularly limited. The shape of the recycled plastic (B) may be, for example, rod-shaped, particulate, cubic, rectangular parallelepiped, amorphous, etc. In one embodiment, it is preferable that the recycled plastic possesses the shape of pellets.

The laminate (A) is heated and melted at a predetermined temperature, and further kneaded to form a recycled resin composition (a). In this process, it is preferable to adjust the temperature range considering the glass transition temperature, melting temperature of the laminate (A), the shape of the recycled plastic, and the pressure applied in the molding process. In one embodiment, the melting temperature may be 120 to 280°C. The temperature of the above-mentioned melting and kneading may preferably be 160°C to 250°C, more preferably 170°C to 240°C, and even more preferably 180°C to 230°C. In the case where the temperature of melting and kneading is adjusted to the above-mentioned temperature range, it is possible to easily obtain a recycled plastic (B) that is uniform and in which the occurrence of burning is suppressed after melting and kneading.

The rotation number of the above-mentioned screw during kneading is 50 to 900 rpm, preferably 80 rpm to 800 rpm, more preferably 100 rpm to 700 rpm, and even more preferably 150 rpm to 600 rpm. The shear rate of the screw is preferably 200 to 4000/sec, more preferably 300 to 3500/sec, and particularly preferably 400 to 3000/sec.

It should be noted that there is a relationship between the shear rate and the rotation number as shown in the following Formula (3).

$(\pi) \times$ (Screw diameter) $\times$ (Screw rotation number)/{(60 $\times$ (Minimum gap distance between cylinder inner wall and screw)}     Formula (3):

In the case where the rotation number is adjusted to 50 rpm or more, sufficient shear stress is applied to the laminate (A), and the recycled resin composition (a), especially the recycled plastic (B), becomes more uniform, and the generation of foreign substances such as insoluble matter may be suppressed. On the other hand, in the case where the rotation number is adjusted to 900 rpm or less, the increase in shear heat of the resin contained in the laminate (A) may be suppressed, and the occurrence of burning may be easily suppressed. As a result, good moldability may also be maintained.

In general, in the case where melting and kneading are performed continuously for a long time (during long-run operation), problems may occur such as temperature rise of the extrusion device due to accumulation of shear heat, and partial clogging due to the screen mesh capturing foreign substances.

However, in this embodiment, by adjusting the screw rotation number to 50 RPM or more, even after the screen mesh is partially clogged, it is possible to suppress a significant increase in the kneading time of the recycled resin composition (a) in the extrusion device, and also easily suppress the occurrence of burning. On the other hand, by adjusting the screw rotation number to 900 RPM or less, it is possible to easily suppress the re-mixing of foreign substances captured by the screen mesh. Furthermore, since thermal decomposition due to shear heat may be easily suppressed, the generation of foreign substances due to thermal decomposition may also be suppressed.

In one embodiment, the ejection amount of the extrusion device is preferably 5 to 60 kg per hour, more preferably 10 to 50 kg per hour, and particularly preferably 15 to 40 kg per hour. In the case where the ejection amount is adjusted within the above range, it is favorable from the viewpoint of ejection pressure and kneading efficiency, and high-quality recycled plastic with fewer foreign substances and less burning may be easily obtained.

Further, by adjusting the kneading time of the recycled resin composition (a) inside the extrusion device, mainly in the melting and kneading unit such as the cylinder, high-quality recycled plastic with fewer foreign substances and less burning may be easily obtained. From this perspective, in one embodiment, the kneading time of the above-mentioned recycled resin composition (a) is preferably 10 to 120 seconds, more preferably 15 to 80 seconds, and even more preferably 20 to 40 seconds.

The filling rate of the recycled resin composition (a) in the extrusion device is preferably 50 to 100 volume%, preferably 65 to 95 volume%, and even more preferably 80 to 90 volume% with respect to the void volume in the extrusion device. In the case where the above-mentioned filling rate is within the above range, it is favorable from the viewpoint of shear heat and kneading time, and high-quality recycled plastic with fewer foreign substances and less burning may be easily obtained. It should be noted that the void volume in the extrusion device refers to the cylinder volume minus the screw volume.

In the present invention, the above-mentioned filling rate is a value calculated according to the following Formulae (4) to (6).

(Mass of recycled resin composition (a) existing in the extrusion device) [kg] = (Total material mass) - {(Mass of material before input into the extrusion device) + (Mass of recycled plastic (B))}    Formula (4):

(Volume of recycled resin composition (a) existing in the extrusion device) [m$^3$] = (Mass of recycled resin composition (a) existing in the extrusion device)/(Density of recycled plastic (B))    Formula (5):

Fill Rate [%] = (Volume of recycled resin composition (a) existing in the extrusion device)/(Void volume in the extrusion device)    Formula (6):

The recycled plastic (B) may be obtained by ejecting the recycled resin composition (a) and cooling the same. In one embodiment, it is preferable to include a screen mesh (metal mesh) at the ejection unit of the extrusion device. In the case where a screen mesh is used, foreign substances may be easily removed from the pellets being formed. The type of screen mesh is not particularly limited. For example, plain weave, twill weave, plain mat weave, and twill mat weave types of woven fabrics, and punching metal types may be mentioned. Among these, plain weave is preferable.

The size of the screen mesh, considering the pressure at the ejection unit and clogging, is preferably 40 mesh or more, more preferably 80 mesh or more, and even more preferably 120 mesh or more in the US standard test sieve number. In one embodiment, the size of the screen mesh may be 250 mesh or less, and preferably may be 200 mesh or less.

In the above-mentioned ejection process, the pressure of the resin at the tip end ejection unit of the extrusion device (hereinafter also referred to as ejection pressure) is preferably 18 MPa or less, more preferably 15 MPa or less, even more preferably 10 MPa or less, and particularly preferably 8 MPa or less. In one embodiment, the ejection pressure of the resin at the tip end ejection unit may be 0.1 MPa or more, preferably may be 1 MPa or more, and may be 2 MPa or more.

The ejection pressure is affected by processing temperature, screw rotation number, ejection amount, resin viscosity, screen mesh, etc. Further, clogging of the mesh by insoluble substances or foreign materials, or foaming caused by water content or chlorine-containing substances, may also be factors in pressure changes. In the case where the above-mentioned pressure in the ejection process is adjusted within the above range, the expansion of the screen mesh (metal mesh) due to pressure may be suppressed. As a result, it becomes difficult for impurities to pass through (capturing foreign substances becomes easier), making it easier to continuously obtain recycled plastic with stable purity.

As methods for cooling and cutting the ejected recycled resin composition (a) to form recycled plastic (B), for example, hot cut method and strand cut method may be mentioned. Although not particularly limited, considering continuous productivity, the hot cut method is preferable.

As cooling methods, for example, air cooling, forced air cooling, and water cooling may be mentioned. In one embodiment, it is preferable that the above-mentioned manufacturing method includes a water cooling process that performs cooling by water cooling. In one embodiment, it is preferable to cool the recycled resin composition (a) to 20°C to 80°C using cold water, and more preferably to cool the same to 30°C to 60°C. The recycled resin composition (a) becomes handleable as a solid (recycled plastic) when it reaches a temperature of approximately 40°C.

(Additives for recycled plastic (B))

In one embodiment, the recycled plastic (B) may further contain known additives and the like to an extent that does not impair the effects of the present invention. For example, in the above-mentioned manufacturing method, in addition to the above-mentioned laminate (A), various additives and the like may be used as needed and processed in the extrusion device.

In one embodiment, the mixing of the cut pieces or crushed pieces obtained by subdividing the above-mentioned laminate (A) with optional components such as various additives may be performed using a Henschel mixer, tumbler, or disperser prior to supplying them to the melting and kneading unit of the extrusion device. In another embodiment, without preliminary mixing, various additives may be further supplied when supplying the above-mentioned laminate to the melting and kneading unit of the extrusion device, and these may be melt kneaded, or various additives may be supplied from a separate feed port from the above-mentioned laminate using a known side feeder and the like, and these may be melt kneaded.

Although not particularly limited, examples of additives include antioxidants, lubricants, weather stabilizers, waxes, antistatic agents, and compatibilizers. The above-mentioned lubricant preferably contains at least one selected from the group consisting of fatty acid amide-based, alkylene fatty acid amide-based, metallic soap-based, and ester-based lubricants. The weather stabilizer preferably contains hindered amine-based compounds. The wax is preferably a compound with an acid value of 5 mgKOH/g or less. The antistatic agent preferably contains at least one selected from the group consisting of fatty acid sulfonate salts and fatty acid ester-based antistatic agents. The compatibilizer is preferably an olefin-based block copolymer, etc.

In one embodiment, from the viewpoint of preventing burning, it is preferable to perform melting and kneading in the presence of an antioxidant in the above-mentioned manufacturing method.

(Antioxidant)

As antioxidants, known antioxidants such as phenol-based, phosphoric acid-based, sulfur-based, and amine-based antioxidants may be used, but it is preferable to include at least one selected from the group consisting of phenol-based antioxidants and phosphoric acid-based antioxidants.

The addition amount of the above-mentioned antioxidant is preferably 0.01 to 5 mass%, more preferably 0.01 to 3 mass%, further preferably 0.05 to 1 mass%, and particularly preferably 0.1 to 0.5 mass%, with the total mass of the recycled resin composition (a) or the plastic laminate (A) as a reference (100 mass%). Thus, it is preferable to adjust the supply amount of the laminate and the antioxidant so that the content of the antioxidant is within the above range. By using the antioxidant, it becomes even easier to obtain high-quality recycled plastic with fewer foreign substances and less burning.

(Phenol-based antioxidant)

Examples of usable antioxidants include monophenolic, bisphenolic, trisphenolic, tetraphenolic, polyphenolic, and thiobisphenolic antioxidants. Among these, at least one selected from the group consisting of bisphenolic, trisphenolic, and tetraphenolic antioxidants, which have a large effect on preventing burning, is preferable. It is more preferable to use at least a tetraphenolic antioxidant.

Commercially available products may also be used as phenol-based antioxidants. For example, Irganox 1010, Irganox 1076, Irganox 245, etc., manufactured by BASF may be used.

(Phosphoric acid-based antioxidant)

Examples of usable antioxidants include monononyl, dinonyl, trinonyl, allyl, alkylaryl, monoalkyl, dialkyl, trialkyl, and dioxane antioxidants. Among these, at least one selected from the group consisting of trinonyl, allyl, alkylaryl, trialkyl, and dioxa antioxidants, which have a large effect on preventing burning, is preferable. It is more preferable to use at least a dioxane antioxidant.

Commercially available products may also be used as phosphoric acid-based antioxidants. For example, Irgafos 168 manufactured by BASF, ADK STAB PEP-36 manufactured by ADEKA, etc., may be used.

<1-2>Plastic laminate (A)

The plastic laminate (A) includes at least a first resin layer, an adhesive layer and/or a printing layer, and a second resin layer. The forms of the first resin layer and the second resin layer include film-like or sheet-like substrates and sealants, as well as resin films formed by melt coating. Among these, film-like or sheet-like substrates and sealants are preferable. A laminated material may be mentioned as one embodiment of the plastic laminate.

In the manufacturing method according to the present invention, a laminated material may be suitably used as a raw material for the recycled plastic (B). The laminated material refers to a laminate manufactured by bonding each resin layer (lamination), and may include the first resin layer, at least one of an adhesive layer and a printing layer, and the second resin layer. In one embodiment, the laminated material may have a structure in which the first resin layer, the printing layer, and the second resin layer are bonded together. Further, in one embodiment, the laminated material may have a structure in which the first resin layer, the adhesive layer, and the second resin layer are bonded together. It should be noted that in the case where multiple layers other than the substrate layer, such as the printing layer, are laminated in contact with each other as a first printing layer and a second printing layer, these are collectively referred to simply as a printing layer.

In one embodiment, it is preferable that the first resin layer in the above-mentioned laminated material is a plastic substrate (hereinafter abbreviated as "substrate" or "sealant"). In this embodiment, specific examples of the structure of the plastic laminate (A) include the following structures. However, these are not limited to the following. In the representation of the structures (1) to (20) below, "/" indicates the boundary between each layer. The adhesive layer is not limited to a layer composed of adhesives used in conventional known methods such as dry lamination and non-solvent lamination. The adhesive layer may be a layer composed of polyolefin resin or other thermoplastic resins in extrusion lamination.

(1) Substrate/printing layer/adhesive layer/sealant
(2) Substrate/printing layer/adhesive layer/intermediate substrate/adhesive layer/sealant
(3) Substrate/printing layer/adhesive layer/first intermediate substrate/adhesive layer/second intermediate substrate/adhesive layer/sealant
(4) Substrate/printing layer/thermoplastic resin layer
(5) Substrate/printing layer/(AC agent layer)/thermoplastic resin layer/sealant
(6) Substrate/printing layer/(AC agent layer)/thermoplastic resin layer/intermediate substrate/(AC agent layer)/thermoplastic resin layer/sealant
(7) Substrate/printing layer/adhesive layer/intermediate substrate/(AC agent layer)/thermoplastic resin layer/sealant
(8) Substrate/printing layer/(AC agent layer)/thermoplastic resin layer/intermediate substrate/adhesive layer/sealant
(9) Printing layer/substrate/heat seal layer
(10) Printing layer/substrate/adhesive layer/sealant
(11) Substrate/adhesive layer/sealant
(12) Substrate/adhesive layer/intermediate substrate/adhesive layer/sealant
(13) Printing layer/substrate/adhesive layer/intermediate substrate/adhesive layer/sealant
(14) Printing layer/substrate/(AC agent layer)/thermoplastic resin layer/sealant

In the above-mentioned structure, the AC agent layer represents an anchor coat agent layer, and is used to improve adhesion between the substrate or the printing layer and the thermoplastic resin layer. The above-mentioned (AC agent layer) may or may not exist. The above-mentioned (AC agent layer) is one embodiment of the adhesive layer.

The laminate of the above-mentioned structure may further include a barrier layer, respectively. In one embodiment, it is preferable that the laminate further includes a barrier layer. It is preferable that the barrier layer includes at least one selected from the group consisting of a vapor deposition layer, a barrier coat layer, and a barrier adhesive layer. Preferred forms of laminates including a barrier layer are shown below. However, in the present invention, the form of the laminate is not limited thereto.

(15) Substrate/vapor deposition layer/printing layer/adhesive layer/sealant
(16) Substrate/printing layer/adhesive layer/vapor deposition layer/intermediate substrate/adhesive layer/sealant
(17) Substrate/printing layer/adhesive layer/intermediate substrate/vapor deposition layer/adhesive layer/sealant
(18) Substrate/printing layer/adhesive layer/vapor deposition layer/sealant
(19) Substrate/barrier coat layer/printing layer/adhesive layer/sealant
(20) Substrate/printing layer/barrier coat layer/adhesive layer/sealant
(21) Barrier coat layer/substrate/printing layer/adhesive layer/sealant
(22) Substrate/printing layer/barrier adhesive layer/sealant
(23) Substrate/vapor deposition layer/adhesive layer/sealant
(24) Substrate/barrier coat layer/adhesive layer/sealant

The following describes more specifically each layer constituting the laminate (A).

(a-1) First resin layer

In the laminate (A), it is preferable that the first resin layer primarily contains polyolefin resin as a raw material. Compared to ester-based resins, since polyolefin resins have higher resistance to alkaline aqueous solutions and heat during the molding process, and are less likely to undergo thermal decomposition or hydrolysis, polyolefin resins may maintain a high molecular weight. Furthermore, from the viewpoint of ease of recovery after recycling, suitable examples of polyolefin resins include biaxially-stretched polypropylene (OPP), non-stretched polypropylene (CPP), low-density polyethylene (LDPE), linear low-density polyethylene (LLDPE), medium-density polyethylene (MDPE), high-density polyethylene (HDPE) and other polyethylenes, acid-modified polyethylene, acid-modified polypropylene, and copolymerized polypropylene.

Although the thickness of the first resin layer is not particularly limited, from the viewpoint of processability during packaging container manufacturing, the thickness may preferably be 5 $\mu$m or more and 150 $\mu$m or less, and more preferably 10 $\mu$m or more and 70 $\mu$m or less. In one embodiment, among polyolefin resins, those having heat-sealability may be suitably used. Examples corresponding to this include corona-treated biaxially-stretched polypropylene (OPP) film, high-density polyethylene (HDPE) film, non-stretched polypropylene (CPP) film, linear low-density polyethylene (LLDPE) film, and PE resin film formed by melt coating. Further, it is also preferable that the first resin layer is in the form of a barrier substrate that further includes a vapor deposition layer or a barrier coat layer on the above-mentioned substrate.

As a plastic substrate primarily containing polyolefin resin, a polyolefin substrate is preferable, and olefin substrates may be laminated together, or a substrate different from the olefin substrate may be laminated via an adhesive or the like. "Substrate different from the olefin substrate" refers to films having different properties, regardless of type. Further, in the case of a laminated substrate, it may be in a form including an adhesive layer. The method of laminating plastic substrates is not particularly limited, and conventional known methods such as co-extrusion method, heat fusion, and pressure bonding via an adhesive layer may be mentioned. However, in the case where a "substrate different from the olefin substrate" is used, it is used within a range where the content of polyolefin resin is 80 mass% or more with the total mass of the plastic laminate (A) as a reference.

The substrate is preferably in a form that contains (coated or kneaded with) additives such as antistatic agents, anti-fogging agents, and ultraviolet prevention agents, in a form having an easy-adhesion coat layer (for example, a layer containing polyvinyl alcohol and derivatives thereof), or in a form where the surface of the substrate has been subjected to corona treatment or low-temperature plasma treatment. The above-mentioned addition or processing is applied for the purpose of improving the wettability of printing ink and other coating agents, or for the purpose of imparting specific functionality to the film. For example, it is suitably applied to provide packaging material with excellent visibility of contents by preventing fogging of the packaging material due to moisture.

(a-2) Second resin layer

The second resin layer in the laminate (A) may be the same as or different from the first resin layer, and examples suitably include biaxially-stretched polypropylene (OPP), non-stretched polypropylene (CPP), low-density polyethylene (LDPE), linear low-density polyethylene (LLDPE), medium-density polyethylene (MDPE), high-density polyethylene (HDPE) and other polyethylenes, acid-modified polyethylene, acid-modified polypropylene, and copolymerized polypropylene.

Although the thickness of the second resin layer is not particularly limited, from the viewpoint of processability during packaging container manufacturing, the thickness may preferably be 5 $\mu$m or more and 150 $\mu$m or less, and more preferably 10 $\mu$m or more and 70 $\mu$m or less. In one embodiment, among polyolefin resins, those having heat-sealability may be suitably used. Examples corresponding to this include corona-treated biaxially-stretched polypropylene (OPP) film, high-density polyethylene (HDPE) film, non-stretched polypropylene (CPP) film, linear low-density polyethylene (LLDPE) film, and PE resin film formed by melt coating.

(b) Printing layer

The printing layer in the laminate (A) is intended for decoration or imparting aesthetic appeal, as well as for various displays such as contents, expiration date, and manufacturer or seller information. The printing layer may be a layer that displays any picture, pattern, text, and symbol, etc. The printing layer may also be a solid printing layer without pictures, patterns, text, and symbols, etc.

The method of forming the printing layer is not particularly limited, and it may be formed using known colorants (pigments and/or dyes), but it is preferable to be formed using printing ink containing pigments and binder resin. Further, the printing layer may have a single-layer structure or a multi-layer structure, and may be printed on the surface layer. The thickness of the printing layer is preferably 0.1 to 10 μm, more preferably 0.5 to 5 μm, and even more preferably 1 to 2.5 μm.

(Pigment)

The printing layer in the laminate (A) is preferably formed using printing ink containing a colorant. Considering the quality deterioration due to coloring of recycled plastic, the content ratio of the colorant in the total mass of the printing layer is preferably 30 mass% or less, more preferably 25 mass% or less, and even more preferably 23 mass% or less. The colorant is preferably a pigment, and the pigment may be any of organic pigments, inorganic pigments, or extender pigments.

As inorganic pigments, known pigments such as titanium oxide may be used. As extender pigments, silica, barium sulfate, kaolin, clay, calcium carbonate, and magnesium carbonate are preferred. As organic pigments, known pigments consisting of organic compounds and organometallic complexes may be suitably used. The colorants such as pigments may be used alone or in combination of two or more types. Representative pigments are exemplified below.

The above-mentioned organic pigments include, but are not limited to, soluble azo-based, insoluble azo-based, azo-based, phthalocyanine-based, halogenated phthalocyanine-based, anthraquinone-based, anthanthrone-based, dianthraquinonyl-based, anthrapyrimidine-based, perylene-based, perinone-based, quinacridone-based, thioindigo-based, dioxazine-based, isoindolinone-based, quinophthalone-based, azomethine azo-based, flavanthrone-based, diketopyrrolopyrrole-based, isoindoline-based, indanthrone-based, and carbon black-based pigments. Also, for example, Carmine 6B, Lake Red C, Permanent Red 2B, Disazo Yellow, Pyrazolone Orange, Carmine FB, Chromophthal Yellow, Chromophthal Red, Phthalocyanine Blue, Phthalocyanine Green, Dioxazine Violet, Quinacridone Magenta, Quinacridone Red, Indanthrone Blue, Pyrimidine Yellow, Thioindigo Bordeaux, Thioindigo Magenta, Perylene Red, Perinone Orange, Isoindolinone Yellow, Aniline Black, Diketopyrrolopyrrole Red, and daylight fluorescent pigments may be mentioned.

As for the hue of organic pigments, at least one type selected from the group consisting of black pigments, indigo pigments, green pigments, red pigments, purple pigments, yellow pigments, orange pigments, and brown pigments is preferred. Furthermore, at least one or two or more types selected from the group consisting of black pigments, indigo pigments, red pigments, and yellow pigments are preferred. Specific examples of organic pigments are indicated by C.I. numbers of the Colour Index International (abbreviated as C.I.). Preferably, they are C.I. Pigment Red 57:1, C.I. Pigment Red 48:1, C.I. Pigment Red 48:2, C.I. Pigment Red 48:3, C.I. Pigment Red 146, C.I. Pigment Red 242, C.I. Pigment Yellow 83, C.I. Pigment Yellow 14, C.I. Pigment Orange 38, C.I. Pigment Orange 13, C.I. Pigment Yellow 180, C.I. Pigment Yellow 139, C.I. Pigment Red 185, C.I. Pigment Red 122, C.I. Pigment Red 178, C.I. Pigment Red 149, C.I. Pigment Red 144, C.I. Pigment Red 166, C.I. Pigment Violet 23, C.I. Pigment Violet 37, C.I. Pigment Blue 15, C.I. Pigment Blue 15: 1, C.I. Pigment Blue 15:2, C.I. Pigment Blue 15:3, C.I. Pigment Blue 15:4, C.I. Pigment Blue 15:6, C.I. Pigment Green 7, C.I. Pigment Orange 34, C.I. Pigment Orange 64, and C.I. Pigment Black 7.

As for inorganic pigments, titanium oxide, zinc oxide, zinc sulfide, barium sulfate, calcium carbonate, chromium oxide, silica, aluminum particles, mica, bronze powder, chrome vermilion, chrome yellow, cadmium yellow, cadmium red, ultramarine blue, Prussian blue, bengara, yellow iron oxide, iron black, titanium oxide, zinc oxide, and the like may be mentioned, and for aluminum, there are leafing type and non-leafing type, but non-leafing type is preferred.

(Binder resin)

Binder resin refers to the binding resin in the printing layer of the laminate (A), and as described later, it is preferable that the chlorine content ratio is 5 mass% or less with the total mass of the binder resin as a reference.

The binder resin is preferably a thermoplastic resin soluble in organic solvents. As the binder resin, it is preferable to use in combination a resin with a glass transition temperature of - 60°C or higher and less than 40°C, and a resin with a glass transition temperature of 40°C or higher and 200°C or lower. More preferably, a resin with a glass transition temperature of -50°C to 0°C and a resin with a glass transition temperature of 50°C to 190°C may be used in combination. It is noted that in this specification, the glass transition temperature refers to the measured value obtained by differential scanning calorimeter (DSC).

The binder resin is not limited to the following, but specific examples include urethane resin, cellulose-based resin, polyamide resin, rosin-based resin, ethylene-vinyl acetate copolymer resin, vinyl chloride-vinyl acetate copolymer resin, vinyl acetate resin, acrylic resin, styrene resin, dammar resin, styrene-maleic acid copolymer resin, polyester resin, alkyd resin, terpene resin, phenol-modified terpene resin, ketone resin, cyclized rubber, butyral, polyacetal resin, petroleum resin, and modified resins thereof. These resins may be used alone or in combination of two or more types. Among these, it is preferable to contain one or more selected from the group consisting of resins other than vinyl chloride-vinyl acetate copolymer resin, and it is more preferable to contain at least urethane resin.

As for urethane resin, known urethane resins such as polyester-based urethane resin (C), polyether-based urethane resin, polycarbonate-based urethane resin, and polyolefin-based urethane resin may be used, but polyester-based urethane resin (C) is preferred.

[Polyester-based urethane resin (C)]

Polyester-based urethane resin (C) refers to a urethane resin having structural units derived from polyester. Preferably, it is in a form containing urea bonds.

In the total mass of the polyester-based urethane resin (C), it is preferable to have 40 mass% or more of structural units derived from polyester, more preferably 50 mass% or more, even more preferably 60 mass% or more, and particularly preferably 65 mass% or more.

The polyester-based urethane resin (C) is not limited to the following, but examples include polyester-based urethane resins obtained by reacting a urethane prepolymer, which is obtained by reacting polyisocyanate with polyols including polyester polyol, further with polyamine (chain extender) and, if necessary, a reaction terminator. To obtain a urethane resin having structural units derived from polyester, for example, in the above-mentioned synthesis method of urethane resin, a method of using polyester polyol as the polyol may be used, but it is not particularly limited.

•Polyester polyol

The number average molecular weight of the above-mentioned polyester polyol is preferably 500 to 10,000, and more preferably 1,000 to 5,000. Here, the above-mentioned number average molecular weight is calculated from the hydroxyl value, and the hydroxyl value is a value measured according to JIS K 0070, which is the amount of hydroxyl groups in 1g of resin converted to mg of potassium hydroxide, calculated by esterifying or acetylating the hydroxyl groups in the resin and back-titrating the remaining acid with alkali. When the number average molecular weight of the polyester polyol is 10,000 or less, the printing layer exhibits excellent blocking resistance to plastic films. Further, when the number average molecular weight of the polyester polyol is 500 or more, the flexibility of the printing layer improves, and it exhibits excellent adhesion to plastic films.

As the above-mentioned polyester polyol, polyester diol is preferable, and as the polyester diol, a polyester diol that is a condensation product of diol and dicarboxylic acid (also known as dibasic acid) is preferable. It is noted that the polyester polyol may be used alone or in combination of two or more types.

As the above-mentioned polyester diol, ethylene glycol, diethylene glycol, triethylene glycol, propylene glycol, 1,3-propanediol, 1,4-butanediol, 1,3-butanediol, 1,6-hexanediol, 1,8-octanediol, 1,9-nonanediol, neopentyl glycol, 3-methyl-1,5-pentanediol, 2-methyl-1,3-propanediol, 3,3,5-trimethylpentanediol, 2,4-diethyl-1,5-pentanediol, 1,12-octadecanediol, 1,2-alkanediol, 1,3-alkanediol, 1-monoglyceride, 2-monoglyceride, 1-monoglycerin ether, 2-monoglycerin ether, dimer diol, hydrogenated dimer diol, and the like may be preferably mentioned. Among these, a polyester diol that is a condensation product of dicarboxylic acid and diol including branched diol is preferable. Further, it may also be a polyester diol obtained by ring-opening reaction of cyclic esters (such as lactones).

As the above-mentioned dicarboxylic acid, adipic acid, phthalic anhydride, isophthalic acid, terephthalic acid, maleic acid, fumaric acid, succinic acid, oxalic acid, malonic acid, pimelic acid, azelaic acid, sebacic acid, suberic acid, glutaric acid, 1,4-cyclohexyldicarboxylic acid, dimer acid, hydrogenated dimer acid, and the like may be preferably mentioned, among which adipic acid, succinic acid, sebacic acid, and the like are preferable. Furthermore, polyols having three or more hydroxyl groups and polyvalent carboxylic acids having three or more carboxyl groups may also be used in combination as raw materials for the polyester polyol.

The above-mentioned diol may be classified into linear diols and branched diols.

In this context, linear diols refer to diols with two or more atoms, including alkylene glycols, dialkylene glycols, trialkylene glycols, and other diols. Further, branched diols refer to diols in which at least one hydrogen atom of the hydrocarbon group of an alkylene glycol is substituted with a group other than a hydrogen atom.

Since linear diols provide crystallinity, while branched diols provide flexibility, by balancing these, the polyurethane resin as a binder resin improves in heat resistance. It is believed that the inclusion of branched diol structures and/or linear diol structures in the polyurethane resin also has an effect on the efficiency of recycling packaging materials. As described later, it is more preferable that the polyurethane resin contains both branched diol structures and linear diol structures.

As the above-mentioned branched diols, 2-butyl-2-ethyl-1,3-propanediol (hereinafter also referred to as BEPG), 2-methyl-1,3-propanediol (hereinafter also referred to as MPO), 3-methyl-1,5-pentanediol (also referred to as MPD), neopentyl glycol (also referred to as NPG), 1,2-propylene glycol (hereinafter also referred to as PG), 2,4-diethyl-1,5-pentanediol, 1,3-butanediol, dipropylene glycol, and the like may be mentioned, and at least one branched diol selected from NPG and PG is particularly preferable.

As the above-mentioned linear diols, alkylene glycols are preferable, and ethylene glycol (also referred to as EG), diethylene glycol, 1,3-propanediol (also referred to as 1,3PD), 1,4-butanediol (also referred to as 1,4BD), 1,5-pentanediol, 1,6-hexanediol, 1,8-octanediol, 1,9-nonanediol, 1,4-butynediol, 1,4-butylenediol, diethylene glycol, triethylene glycol, and the like may be mentioned.

Among these, linear diols with 8 or fewer carbon atoms, preferably 6 or fewer carbon atoms, are preferable, and EG, 1,3PD, 1,4BD, 1,5-pentanediol, 1,6-hexanediol, 1,8-octanediol, and the like are preferable. From the viewpoint of physical properties, 1,3PD is particularly preferable.

In the case where the polyester polyol contains branched diols and linear diols, from the viewpoint of laminate strength, the mass ratio of branched diols to linear diols (branched diols : linear diols) in the total diols of the polyester polyol is preferably 10:90 to 90: 10, more preferably 20:80 to 80:20, and even more preferably 30:70 to 70:30.

It should be noted that the branched diol units and linear diol units may exist in a single polyester polyol, respectively, or a polyester polyol containing only branched diol units and a polyester polyol containing only linear diol units may be utilized as mixed raw materials to form a biomass urethane resin, and substantially the same effect may be obtained.

Among these, as a preferable specific example of the polyester polyol, one containing both branched diols and linear diols with adipic acid, succinic acid, sebacic acid, and other dibasic acids is preferable. This results in improved laminate strength in the packaging material.

•Polyisocyanate

As the above-mentioned polyisocyanate, diisocyanate is preferable, and various known aromatic, aliphatic, or alicyclic diisocyanates may be used. For example, representative examples include 1,5-naphthalene diisocyanate, 4,4'-diphenylmethane diisocyanate, 4,4'-diphenyl dimethylmethane diisocyanate, 4,4'-dibenzyl isocyanate, dialkyl diphenylmethane diisocyanate, tetraalkyl diphenylmethane diisocyanate, 1,3-phenylene diisocyanate, 1,4-phenylene diisocyanate, tolylene diisocyanate, butane-1,4-diisocyanate, hexamethylene diisocyanate, isopropylene diisocyanate, methylene diisocyanate, 2,2,4-trimethylhexamethylene diisocyanate, 2,4,4-trimethylhexamethylene diisocyanate, cyclohexane-1,4-diisocyanate, xylylene diisocyanate, isophorone diisocyanate, lysine diisocyanate, dicyclohexylmethane-4,4'-diisocyanate, 1,3-bis(isocyanatemethyl)cyclohexane, methylcyclohexane diisocyanate, m-tetramethylxylylene diisocyanate, and dimer diisocyanate obtained by converting the carboxyl groups of dimer acid to isocyanate groups. These may be used alone or in combination of two or more types. Among these, isophorone diisocyanate, tolylene diisocyanate, and 4,4'-diphenylmethane diisocyanate are preferable, and isophorone diisocyanate is further preferable from the viewpoint of solubility.

The polyester-based urethane resin (C) and other urethane resins preferably have active hydrogen groups such as hydroxyl value and/or amine value. The hydroxyl value is preferably 0.5 to 30 mgKOH/g, more preferably 1 to 20 mgKOH/g, and even more preferably 2 to 15 mgKOH/g. In the case of having an amine value, it is preferably 0.1 to 15 mgKOH/g, and more preferably 1 to 12 mgKOH/g. On the other hand, the acid value of the urethane resin is preferably 5 mgKOH/g or less, and more preferably 3 mgKOH/g or less. The acid value is provided by acidic groups such as carboxyl groups, and minimizing the acid value is intended to improve adhesion to the substrate.

The weight average molecular weight of the polyester-based urethane resin (C) and other urethane resins is preferably 20,000 to 100,000, more preferably 25,000 to 90,000, and even more preferably 30,000 to 80,000. In the case of being within the above range, heat resistance is improved, and recycled plastic with excellent foreign particle number and burning resistance may be obtained.

The molecular weight distribution (Mw/Mn) of the polyester-based urethane resin (C) and other urethane resins is preferably 2.0 to 8.0, more preferably 2.5 to 7.0, and even more preferably 3.0 to 6.0. Mw represents the weight average molecular weight, and Mn represents the number average molecular weight. In the case where Mw/Mn is within the above range, the cohesive force is strengthened by crosslinking with the isocyanate-based curing agent described below, thereby improving heat resistance and obtaining recycled plastic with excellent foreign particle number and burning resistance.

The binder resin preferably contains a resin other than urethane resin (hereinafter referred to as resin L). Resin L may preferably be a resin having a ring structure. More preferably, it may be a resin having at least one ring structure selected from the group consisting of acetal ring structure, aromatic ring structure, alicyclic ring structure, and pyranose ring structure. Even more preferably, it is a resin having an acetal ring structure. These ring structures may have double bonds, or may have alkyl groups or other substituents.

[Resin L]

Resin L contains structural units having ring structures, preferably in the range of 40 to 95 mass% with the mass of resin L as a reference, and more preferably in the range of 50 to 90 mass%.

When resin L contains structural units having ring structures within the above range, pigment dispersion in the printing ink is promoted. Further, the laminate strength of the packaging material is excellent, and deterioration with time may be suppressed. Furthermore, it becomes excellent in blocking resistance.

In the present specification, the mass of monomers having ring structures includes groups substituted or adjacent to the ring structure, such as methyl groups and nitro groups. For example, in the case where resin L is a styrene-acrylic resin, and the structural units derived from $\alpha$-methylstyrene are 50 mass% and the structural units derived from butyl methacrylate, which is an acrylic monomer, are 50 mass%, the content ratio of ring structures is 50 mass%.

The content ratio of structural units having ring structures may be calculated by the following Formula (7).

Content ratio of structural units having ring structures (mass%) = Mass of monomers having ring structures × 100/Total mass of all monomers constituting resin L     Formula (7):

Examples of resins having ring structures include polyvinyl acetal resins, cellulose ester resins, rosin resins, polystyrene resins, polyester resins having ring structures, acrylic resins having ring structures, and copolymer resins thereof. More preferably, the resin may contain at least one selected from the group consisting of polyvinyl acetal resins, cellulose ester resins, and rosin resins. Even more preferably, the resin may contain polyvinyl acetal resin.

• Polyvinyl acetal resin

The above-mentioned polyvinyl acetal resin is obtained by reacting polyvinyl alcohol with aldehydes such as butyraldehyde and/or formaldehyde to form acetal rings, and preferably contains vinyl alcohol units, vinyl acetate units, and acetal ring groups. The polyvinyl acetal resin preferably contains 60 to 90 mass% of acetal rings, 5 to 30 mass% of vinyl alcohol units, and 0.5 to 10 mass% of vinyl acetate units, and more preferably, it is a polyvinyl butyral resin having butyral rings as the acetal rings.

The weight average molecular weight of the polyvinyl acetal resin is preferably 10,000 to 100,000, more preferably 10,000 to 80,000. The glass transition point of the polyvinyl acetal resin is preferably 50 to 80°C, more preferably 60 to 75°C.

• Cellulose ester resin

As the cellulose ester resin, cellulose acetate alkynate resin is preferable, and for example, cellulose acetate propionate and cellulose acetate butyrate are suitably used.

The cellulose ester resin preferably has alkyl groups. The above-mentioned alkyl groups are preferably alkyl groups with 10 or fewer carbon atoms, and for example, methyl group, ethyl group, propyl group, isopropyl group, butyl group, isobutyl group, pentyl group, and hexyl group are suitably used. The alkyl groups may have substituents.

The weight average molecular weight of the cellulose ester resin is preferably 5,000 to 200,000, more preferably 10,000 to 10,000, and even more preferably 15,000 to 80,000. The glass transition point of the cellulose ester resin is preferably 120°C to 180°C, more preferably 130 to 170°C.

By using both urethane resin and cellulose ester resin, printing suitability, blocking resistance, and other properties are improved.

• Rosin resin

Rosin resin refers to a substance that has structural units derived from rosin acid (for example, abietic acid, neoabietic acid, palustric acid, pimaric acid, isopimaric acid, dehydroabietic acid) as the main component. Here, the main component refers to 50 mass% or more. The rosin acid or rosin resin may be hydrogenated.

As the rosin resin, at least one selected from the group consisting of rosin-modified phenol resin, rosin ester resin, rosin-modified maleic acid resin, and polymerized rosin resin is preferable. The acid value of the rosin resin is preferably 350 mgKOH/g or less, more preferably 250 mgKOH/g or less, and even more preferably 150 mgKOH/g or less.

In one embodiment, an acid value of 100 mgKOH/g or less is preferable, and 50 mgKOH/g or less is more preferable.

The softening point of the rosin resin is preferably 60 to 180°C, and more preferably 70 to 150°C. In this specification, the softening point refers to a measured value by the ring and ball method, which may be measured in accordance with JIS K 2207.

• Rosin ester

As the rosin resin, rosin ester, which is an ester condensation resin of rosin acid with a low molecular weight polyol having a molecular weight of 1,000 or less, is preferable. The low molecular weight polyol preferably has 2 to 4 hydroxyl groups per molecule (hereinafter, may be abbreviated as bifunctional to tetrafunctional) and a molecular weight of 50 to 500. Examples of such low molecular weight polyols include: bifunctional low molecular weight polyols such as ethylene glycol, 1,3-propanediol, 1,4-butanediol, 1,10-decanediol; trifunctional low molecular weight polyols such as glycerin, trimethylolpropane; tetrafunctional low molecular weight polyols such as erythritol, pentaerythritol; which may be suitably used. Among these, trifunctional and/or tetrafunctional low molecular weight polyols are preferable.

The weight average molecular weight of the rosin ester is preferably 500 to 2,000, and more preferably 500 to 1,500.

[Chlorine content ratio of binder resin]

In one embodiment, the chlorine content ratio of the binder resin is preferably 5 mass% or less, including the case where it is 0. The above-mentioned chlorine content ratio is more preferably 4 mass% or less, further preferably 3 mass% or less, and particularly preferably 2 mass% or less. Further, a form of 1 mass% or less, or 0.5 mass% or less is also particularly preferable. The above-mentioned chlorine content ratio is the content ratio (mass%) of chlorine atoms with the total mass of the binder resin as a reference. When the chlorine content ratio is 5 mass% or less, it is excellent in environmental safety, and free chlorine is less likely to be generated, which is also preferable from the viewpoint of recycling. In the case where the chlorine content ratio in the binder resin is adjusted within the above range, undesirable foaming in the manufacturing of recycled plastic may be easily suppressed.

The above-mentioned chlorine content ratio may be measured using known methods such as ion chromatography (IC) or ICP mass spectrometry (ICP-MS). As measurement instruments, for example, LC-20ADsp manufactured by Shimadzu Corporation for IC, and Agilent 7700x manufactured by Agilent Technologies for ICP-MS may be mentioned. Further, the chlorine content ratio of the printing layer may be simply calculated from the chlorine content ratio of each raw material constituting the printing layer using the following Formulae (8) and (9).

The same applies to other layers.

Chlorine content ratio (%) in total solid mass of binder resin = Mass of chlorine in total solid mass of binder resin/Total solid mass of binder resin (%)    Formula (8):

Chlorine content ratio (%) in total solid mass of printing layer = Mass of chlorine in total solid mass of printing layer/Total solid mass of printing layer (%)    Formula (9):

In the present invention, the chlorine content ratio is preferably measured in accordance with JIS K 0127 (2013). In this measurement method, a sample pretreated by combustion method is quantified by ion chromatography method.

[Nitrification degree of binder resin]

The nitrification degree is the degree of esterification of nitric acid esters expressed as the nitrogen content (mass%). For example, the nitrification degree of commercially available nitrocellulose is typically 10 to 12 mass%.

In the present invention, the binder resin preferably has a nitrification degree of 1 mass% or less, including the case where it is 0. By having a nitrification degree of 1 mass% or less, NOX gas generation may be suppressed, and a recycled material with higher safety may be provided.

The nitrification degree of the binder resin is more preferably 0.6 mass% or less, further preferably 0.4 mass% or less, and particularly preferably 0.2 mass% or less.

As for the nitrification degree of the above-mentioned urethane resin, it is preferably 0.3 mass% or less, more preferably 0.2 mass% or less, and further preferably 0.1 mass% or less. Further, as for the nitrification degree of the above-mentioned resin L, it is preferably 0.8 mass% or less, more preferably 0.6 mass%, and further preferably 0.4 mass%.

(Isocyanate-based curing agent)

In one embodiment, the printing ink used to form the printing layer preferably includes an isocyanate-based curing agent. For example, the isocyanate group of the isocyanate-based curing agent may crosslink with the hydroxyl groups or amino groups possessed by the urethane resin, and in the case where other active hydrogen groups are present, it may crosslink with these active hydrogen groups, thereby improving heat resistance. In the case where the urethane resin does not have such active hydrogen groups, heat resistance may be improved through self-crosslinking of the isocyanate-based curing agent alone.

The following describes preferred embodiments of the isocyanate-based curing agent. The weight average molecular weight of the isocyanate-based curing agent is preferably 800 to 8000, more preferably 1000 to 4500, and further preferably 1500 to 4000. Further, the molecular weight distribution (Mw/Mn) of the isocyanate-based curing agent is preferably 2.0 to 5.0, more preferably 2.2 to 4.5, and further preferably 2.5 to 4.0. In the case where the weight average molecular weight and Mw/Mn are within the above range, the heat resistance of the printing ink is improved due to the interaction with the above-mentioned urethane resin, thereby obtaining a high-quality recycled plastic with fewer foreign substances and less burning.

As the isocyanate-based curing agent, polyisocyanates including adduct-type polyisocyanates (adducts), biuret-type polyisocyanates (biurets), isocyanurate-type polyisocyanates (isocyanurates), and bifunctional polyisocyanates are suitable. Examples of adducts, biurets, and isocyanurates include adducts obtained from the reaction of trimethylolpropane and other polyols with diisocyanates, biurets in which diisocyanates are dimerized and connected by biuret bonds, and isocyanurates obtained from the cyclotrimerization reaction of diisocyanates. As the diisocyanate, any of the above-mentioned diisocyanates may be selected and used.

Among these, toluene diisocyanate (TDI), methylene diphenyl diisocyanate (MDI), hydrogenated methylene diphenyl diisocyanate (hydrogenated MDI), hexamethylene diisocyanate (HDI), isophorone diisocyanate, xylylene diisocyanate (XDI), and hydrogenated xylylene diisocyanate (hydrogenated XDI) are preferably mentioned. The adduct-type polyisocyanates, biuret-type polyisocyanates, and isocyanurate-type polyisocyanates may be used in combination of two or more types, and may also be used in combination with other polyisocyanates.

The mass ratio of the urethane resin to the isocyanate-based curing agent (urethane resin : isocyanate-based curing agent) is preferably 99:1 to 60:40, more preferably 98:2 to 65:35, and further preferably 95:5 to 70:30. In the case where resin L is used in addition to the urethane resin, the mass ratio of the total amount of urethane resin and resin L to the isocyanate-based curing agent is preferably 99:1 to 60:40, and more preferably 95:5 to 70:30. In the case where the above-mentioned mass ratio is adjusted within the above range, the heat resistance is improved, and a high-quality recycled plastic with fewer foreign substances and less burning may be easily obtained.

(Additives contained in printing layer)

The printing layer may contain known additives to the extent that they do not impair the effects of the present invention, such as pigment dispersants, isocyanate-based curing agents, chelate crosslinking agents, hydrocarbon waxes, matting agents, vapor-phase silica, wet-process silica, organically treated silica, alumina-treated silica and other fine powder silicas, fatty acid amide waxes, defoaming agents, leveling agents, plasticizers, infrared absorbers, ultraviolet absorbers, and flame retardants.

<Adhesive layer>

The adhesive layer is not particularly limited as long as it may adhere each layer, and preferably includes dry laminate adhesives and non-solvent laminate adhesives such as olefin-based adhesives, acrylic-based adhesives, ethylene-vinyl acetate copolymer-based adhesives, reactive urethane adhesives, as well as imine-based anchor coating agents, butadiene-based anchor coating agents, isocyanate-based anchor coating agents, and thermoplastic resins used in extrusion lamination. The method of adhering (also referred to as laminating) each layer is not particularly limited, and conventional known methods such as extrusion lamination method, dry lamination method, and non-solvent lamination method may be mentioned.

(Polyol resin (D))

The polyol resin (D) is not particularly limited, and examples include polyester polyols, polyether polyols, polyurethane polyols, polyester amide polyols, acrylic polyols, polycarbonate polyols, polycaprolactone polyols, polyvalerolactone polyols, polyolefin polyols, polyhydroxyalkanes, castor oil or mixtures thereof, as well as glycols such as ethylene glycol, propylene glycol, 1,3-propanediol, 1,4-butanediol, 1,5-pentanediol, 3-methyl-5-pentanediol, 1,6-hexanediol, neopentyl glycol, methylpentane glycol, triethylene glycol, tetraethylene glycol, dipropylene glycol, bishydroxyethoxybenzene, 1,4-cyclohexanediol, 1,4-cyclohexanedimethanol, triethylene glycol; polyalkylene glycols with a number average molecular weight of 200 to 3,000; trifunctional or tetrafunctional aliphatic alcohols such as glycerin, trimethylolpropane, pentaerythritol; and polyols obtained by adding the above-mentioned glycols or polyols to the above-mentioned trifunctional or tetrafunctional aliphatic alcohols. These may be used alone or in combination of two or more types.

As the polyol resin (D), those containing structural units derived from polyester polyols or structural units derived from polyether polyols are preferable. It may also be the polyester polyol or polyether polyol itself. Among these, it is preferable that the polyol resin (D) is a urethane polyol resin containing a urethane structure.

As the above-mentioned polyester polyol, examples include polyester polyols obtained by esterification reaction of dibasic acids or their dialkyl esters or mixtures thereof (hereinafter also referred to as carboxyl group components) such as terephthalic acid, isophthalic acid, naphthalenedicarboxylic acid, phthalic anhydride, adipic acid, azelaic acid, sebacic acid, succinic acid, glutaric acid, tetrahydrophthalic anhydride, hexahydrophthalic anhydride, maleic anhydride, itaconic anhydride, with diols or mixtures thereof (hereinafter also referred to as hydroxyl group components) such as ethylene glycol, propylene glycol, diethylene glycol, dipropylene glycol, triethylene glycol, butylene glycol, neopentyl glycol, dineopentyl glycol, trimethylolpropane, glycerin, 1,6-hexanediol, 1,4-butanediol, 1,4-cyclohexanedimethanol, 3-methyl-1,5-pentanediol, 3,3'-dimethylolheptane, 1,9-nonanediol, polyoxyethylene glycol, polyoxypropylene glycol, polytetramethylene ether glycol, polyether polyol, polycarbonate polyol, polyolefin polyol, acrylic polyol, polyurethane polyol; and polyester polyols obtained by ring-opening polymerization of lactones such as polycaprolactone, polyvalerolactone, poly($\beta$-methyl-$\gamma$-valerolactone). The above-mentioned carboxyl group components and hydroxyl group components may be used in combination of two or more types.

As the above-mentioned polyether polyol, examples include polyether diols, polyether triols, etc. Specifically, examples include polyether diols obtained by polymerizing oxirane compounds such as ethylene oxide, propylene oxide, butylene oxide, tetrahydrofuran, using water, ethylene glycol, propylene glycol, or other bifunctional low molecular weight polyols as initiators; polyether triols obtained by polymerizing oxirane compounds such as ethylene oxide, propylene oxide, butylene oxide, tetrahydrofuran, using low molecular weight triols such as trimethylolpropane, glycerin as initiators.

The polyol resin (D) containing structural units derived from the above-mentioned polyester polyol or polyether polyol may be a polyester urethane polyol or polyether urethane polyol obtained by further reacting the above-mentioned polyester polyol or polyether polyol with a diisocyanate, or may be obtained by further reacting with an acid anhydride.

Examples of the above-mentioned diisocyanate include 2,4-tolylene diisocyanate, 2,6-tolylene diisocyanate, xylylene diisocyanate, diphenylmethane diisocyanate, isophorone diisocyanate, 1,5-naphthalene diisocyanate, hexamethylene diisocyanate, and hydrogenated diphenylmethane diisocyanate.

Examples of the above-mentioned acid anhydride include pyromellitic anhydride, mellitic anhydride, trimellitic anhydride, and trimellitic acid ester anhydride. Examples of trimellitic acid ester anhydride include ethylene glycol bis(anhydrotrimellitate) and propylene glycol bis(anhydrotrimellitate).

The weight average molecular weight (Mw) of the polyol resin (D) is preferably 2,000 to 80,000, more preferably 5,000 to 60,000, and even more preferably 10,000 to 60,000.

Further, by using a polyol resin (D) with a molecular weight distribution (Mw/Mn) of 1.5 to 10, heat resistance may be improved. Particularly, in the case where the polyol resin contains structural units derived from polyether polyol, the molecular weight distribution (Mw/Mn) thereof is preferably 3.0 to 10, and more preferably 3 to 8. In the case where the polyol resin contains structural units derived from polyester polyol, the molecular weight distribution (Mw/Mn) thereof is preferably 1.5 to 5.0, and more preferably 2 to 4.

The acid value of the polyol resin (D) is not particularly limited, but is preferably 0 to 50 mgKOH/g, more preferably 0 to 40 mgKOH/g. The hydroxyl value of the polyol resin is not particularly limited, but is preferably 1 to 200 mgKOH/g, more preferably 3 to 150 mgKOH/g. In the case where the above-mentioned acid value is adjusted within the above range, since crosslinking with the isocyanate compound (I) proceeds easily, and heat resistance is improved, recycled plastic with fewer foreign substances and less burning may be easily obtained.

(Isocyanate compound (I))

The isocyanate compound (I) functions as a curing agent in the reactive adhesive. The isocyanate compound (I) may be a compound used for typical two-component reactive adhesives, and may be used without limitation as long as it contains an isocyanate functional group that is reactive with hydroxyl groups. By containing isocyanate groups, the adhesive strength and cohesive force of the adhesive increase, and curing is possible at low temperatures near room temperature.

As the isocyanate compound (I), diisocyanates or urethane prepolymers, which are reaction products of diisocyanates and polyols, are preferable. As diisocyanates, various known aromatic, aliphatic, or alicyclic diisocyanates may be used. For example, representative examples include 1,5-naphthalene diisocyanate, 4,4'-diphenylmethane diisocyanate, 4,4'-diphenyl dimethylmethane diisocyanate, 4,4'-dibenzyl isocyanate, dialkyl diphenylmethane diisocyanate, tetraalkyl diphenylmethane diisocyanate, 1,3-phenylene diisocyanate, 1,4-phenylene diisocyanate, tolylene diisocyanate, butane-1,4-diisocyanate, hexamethylene diisocyanate, isopropylene diisocyanate, methylene diisocyanate, 2,2,4-trimethylhexamethylene diisocyanate, 2,4,4-trimethylhexamethylene diisocyanate, cyclohexane-1,4-diisocyanate, xylylene diisocyanate, isophorone diisocyanate, lysine diisocyanate, dicyclohexylmethane-4,4'-diisocyanate, 1,3-bis(isocyanatemethyl)cyclohexane, methylcyclohexane diisocyanate, m-tetramethylxylylene diisocyanate, and dimer diisocyanate obtained by converting the carboxyl groups of dimer acid to isocyanate groups. These may be used alone or in combination of two or more types.

Among these, from the viewpoint of preventing yellowing and imparting flexibility for improved adhesion, the use of aliphatic diisocyanates such as hexamethylene diisocyanate and xylylene diisocyanate, and alicyclic diisocyanates such as isophorone diisocyanate is preferable, and to achieve compatibility with retort resistance, it is preferable to use the same as polyisocyanate compounds with three or more functional groups, such as adducts, isocyanurates, or biurets of trimethylolpropane and the like.

In one embodiment, it is preferable that the polyol resin (D) and the isocyanate compound (I) are used such that the equivalent ratio (NCO/OH) of the functional groups of the isocyanate groups derived from the isocyanate resin to the hydroxyl groups derived from the polyol resin is 1.5 to 8.0, and more preferably 2.0 to 5.0. In the case where the above-mentioned equivalent ratio is adjusted within the above range, heat resistance is improved, and recycled plastic with fewer foreign substances and less burning may be easily obtained.

(Additives contained in adhesive layer)

The adhesive layer may contain, as necessary, known additives such as reaction accelerators, silane coupling agents, phosphoric acid, phosphoric acid derivatives, leveling agents, and defoaming agents.

(d) Barrier layer

In one embodiment, the barrier layer may contain one or more selected from the group consisting of a vapor deposition layer including a vapor deposition film, a barrier coat layer, and a barrier adhesive layer. The following describes these in more detail.

(Vapor deposition layer)

In the case where the plastic laminate (A) has a vapor deposition layer as the barrier layer, it is preferable that the vapor deposition layer includes a vapor deposition film, and it is preferable to use one or more selected from the group consisting of a substrate having a vapor deposition film, an intermediate substrate having a vapor deposition film, and a sealant having a vapor deposition film as the vapor deposition layer. By having a vapor deposition layer including a vapor deposition film, the plastic laminate (A) has high gas barrier properties, specifically oxygen barrier properties and water vapor barrier properties, in addition to which a packaging container manufactured using the laminate (A) may suppress the decrease in mass of the contents filled therein.

The vapor deposition film may be a vapor deposition film of one or two or more kinds of inorganic substances or inorganic oxides such as silicon (Si), aluminum (Al), magnesium (Mg), calcium (Ca), potassium (K), tin (Sn), sodium (Na), boron (B), titanium (Ti), lead (Pb), zirconium (Zr), and yttrium (Y). The vapor deposition film may be configured with two or more layers, and may be composed of the same material or different materials.

Among the above-mentioned, from the viewpoint of adhesiveness and gas barrier properties, it is preferable that the vapor deposition film is composed of aluminum, aluminum oxide (alumina), or silicon oxide (silica).

Further, the thickness of the vapor deposition film is preferably 1 nm or more and 150 nm or less, more preferably 5 nm or more and 60 nm or less, and even more preferably 10 nm or more and 40 nm or less.

By making the thickness of the vapor deposition film 1 nm or more, the oxygen barrier properties and water vapor barrier properties of the vapor deposition layer may be further improved. Further, by making the thickness of the vapor deposition film 150 nm or less, recycled plastic may be suitably used for manufacturing monomaterial packaging containers, and furthermore, the occurrence of cracks in the vapor deposition film may be prevented.

As for the method of forming the vapor deposition film, conventionally known methods may be adopted, for example, physical vapor deposition methods (PVD method) such as vacuum vapor deposition method, sputtering method, ion plating method, or chemical vapor deposition methods (CVD method) such as plasma chemical vapor deposition method, thermal chemical vapor deposition method, photochemical vapor deposition method, etc. may be mentioned.

(Barrier coat layer)

In the case where the plastic laminate (A) has a barrier coat layer as a barrier layer, the barrier coat layer is formed by a barrier coating agent. The barrier coat layer is preferably adjacent to the substrate, intermediate substrate, sealant and/or printing layer. This may improve oxygen barrier properties and water vapor barrier properties.

As the barrier coating agent, in addition to coating agents consisting of a single resin including gas barrier resins such as vinyl chloride-vinylidene chloride copolymer, vinyl acetate-vinylidene chloride copolymer, acrylic ester-vinylidene chloride copolymer, ethylene-vinyl alcohol copolymer (EVOH), polyvinyl alcohol, polyacrylonitrile, polyamide resin, polyester resin, urethane resin, and (meth)acrylic resin, coating agents consisting of inorganic layered compounds and resins as described below may be used.

The inorganic layered compounds are, for example, clay minerals such as those of the kaolinite family, smectite family, and mica family, which are crystalline inorganic compounds having a layered structure. The types, particle sizes, and aspect ratios of these inorganic layered compounds are appropriately selected and are not particularly limited. Among these, the smectite family, such as montmorillonite, hectorite, and saponite, is preferable, as it easily incorporates resin between the layers of the inorganic layered compound to form a composite. In particular, among the smectite family, montmorillonite has the most excellent stability in the molten state and coating properties.

Further, the resin used in the barrier coating agent is not particularly limited as long as it may be easily incorporated between the layers of the above-mentioned inorganic layered compounds, but it is preferable to use a water-soluble polymer. Examples of water-soluble polymers include polyvinyl alcohol (PVA), polyvinylpyrrolidone, starch, methyl cellulose, carboxymethyl cellulose, acrylic resin, and sodium alginate. In particular, polyvinyl alcohol (PVA) is excellent as a coating agent for gas barrier laminates.

Further, the barrier coat layer may also include a composition containing hydrolysis and polycondensation products of metal alkoxides. This metal alkoxide is a compound represented by the general formula M(OR)n, where M is a metal, R is an alkyl group, and n is the coordination number of the alkoxy group. It is preferable that M is selected from the group consisting of Si, Ti, Ar, and Zr, and R is selected from methyl group and ethyl group. In particular, it is preferable to use tetraethoxysilane $[Si(OC_2H_5)_4]$ or triisopropoxyaluminum $[Al(O-2'-C_3H_7)_3]$, because the hydrolysis products of these alkoxides exist relatively stably in aqueous solvents.

The above-mentioned components may be added to the coating agent. Each component may be used alone or in combination with several others. Furthermore, within a range that does not impair the barrier properties of the coating agent, known additives such as isocyanate compounds, silane coupling agents, or dispersants, stabilizers, viscosity adjusting agents, and colorants may be added.

The barrier coat layer may be formed by dissolving or dispersing the above-mentioned materials in water or an appropriate solvent, and then coating and drying. Further, the barrier coat layer may be formed by coating and drying commercially available barrier coating agents.

The coating method for the barrier coating agent uses conventionally known means that are typically used, such as dipping method, roll coating method, screen printing method, and spray method.

The thickness of the barrier coat layer is preferably 0.01 $\mu$m or more and 10 $\mu$m or less, more preferably 0.1 $\mu$m or more and 5 $\mu$m or less, and even more preferably 0.3 $\mu$m or more and 3 $\mu$m or less.

By making the thickness of the barrier coat layer 0.01 $\mu$m or more, the oxygen barrier property and water vapor barrier property of the laminate (A) may be improved. By making the thickness of the barrier coat layer 10 $\mu$m or less, the deterioration of the physical properties of the recycled plastic may be suppressed, and it may be suitably used as a raw material for material recycling.

(Barrier adhesive layer)

The laminate (A) may have a barrier adhesive layer as a barrier layer. The barrier adhesive layer may be formed, for example, by coating and drying a commercially available barrier adhesive. As the barrier adhesive, gas barrier adhesives such as TM-9310 (manufactured by Toyo-Morton, Ltd.), Maxive (manufactured by Mitsubishi Gas Co., Ltd.), and PASLIM (manufactured by DIC Corporation) are preferably used. The thickness of the adhesive layer is preferably 0.1 to 10 $\mu$m, more preferably 0.5 to 5 $\mu$m, and particularly preferably 1.0 to 2.5 $\mu$m.

(e) Intermediate substrate layer

The laminate (A) may further include an intermediate substrate layer. As a specific example of the intermediate substrate layer, similar to the substrate layer, it is preferably a plastic substrate mainly containing polyolefin resin as a raw material. For example, polyolefin-based resins such as low-density polyethylene (LDPE), linear low-density polyethylene (LLDPE), medium-density polyethylene (MDPE), high-density polyethylene (HDPE), ethylene-vinyl acetate copolymer, propylene homopolymer, and ethylene-propylene copolymer may be mentioned, and a form having the above-mentioned vapor deposition layer and barrier coat layer as a gas barrier substrate is preferred. It may also be a composite substrate made by co-extrusion method. Furthermore, it is more preferable that the intermediate substrate is made of the same (identical) material as the substrate and sealant. The same (identical) material refers to combinations such as polypropylene with polypropylene, or polyethylene with polyethylene.

It should be noted that if the content of polyolefin resin is 80 mass% or more with the total mass of the laminate (A) as a reference, the above-mentioned intermediate substrate layer may be made of a material other than polyolefin resin.

(f) Sealant

The laminate (A) may further include a sealant. The sealant plays a role in directly contacting the packaged contents on the inner surface side thereof and protecting the packaged contents. In order to form the laminate into a bag shape, it is preferable that the innermost layer of the sealant has heat-sealing properties. In one embodiment, the second resin layer is preferably the sealant. As materials constituting the sealant, for example, polyolefin-based resins such as low-density polyethylene (LDPE), linear low-density polyethylene (LLDPE), medium-density polyethylene (MDPE), high-density polyethylene (HDPE), ethylene-vinyl acetate copolymer, propylene homopolymer, and ethylene-propylene copolymer may be mentioned, and one or two or more of these resins may be used.

The sealant may be composed of a single layer or multiple layers of two or more layers. It should be noted that in order to suppress shrinkage during heat sealing, the sealant is preferably a non-stretched film made of the above-mentioned resin. Furthermore, it is more preferable that the sealant is made of the same (identical) material as the substrate and intermediate substrate.

The thickness of the sealant is appropriately set according to the application of the laminate and the type and nature of the packaged contents. Although not particularly limited, it is preferably 10 to 200 µm in general. Further, in the case of pouches (especially retort pouches), the thickness of the sealant may be 20 to 150 µm, and more preferably 25 to 130 µm.

The sealant is preferably a sealant that includes the above-mentioned vapor deposition layer or barrier coat layer. It may also be a milky white substrate with pigments or other materials kneaded in, or a composite substrate produced by co-extrusion method.

(Olefin resin content)

From the viewpoint of focusing on the manufacturing of recycled polyolefin resin, in the manufacturing method of this embodiment, the laminate (A) preferably contains 80 mass% or more of polyolefin resin with the total mass of the laminate (A) as a reference. The content of the above-mentioned polyolefin resin is more preferably 85% or more, further preferably 90 mass% or more, and particularly preferably 95% or more.

In the case where the laminate (A) contains polyolefin resin within the above range, it has high recyclability and may be suitably used as a raw material in the manufacturing method of this embodiment. Further, when using a laminate (A) containing polyolefin resin within the above range as a raw material, it is possible to easily obtain a molding material (recycled plastic) that possesses good moldability and may be used for various applications.

The polyolefin resin preferably contains at least one selected from the group consisting of polypropylene and polyethylene. In one embodiment, the polypropylene resin is more preferably a copolymer of propylene and at least one selected from the group consisting of ethylene and butene.

In the case where the configuration of the plastic laminate (A) is such that the first resin layer is the substrate and the second resin layer is the sealant, the following form is more preferable.

(1) Both the substrate and the sealant contain polypropylene. In this case, the heating and melting temperature of the laminate (A) is preferably 150 to 250°C, more preferably 180 to 230°C, and further preferably 190 to 220°C.
(2) The substrate contains polypropylene, and the sealant contains polyethylene. In this case, the heating and melting temperature of the laminate (A) is preferably 140 to 240°C, more preferably 170 to 220°C, and further preferably 180 to 210°C.
(3) Both the substrate and the sealant contain polyethylene. In this case, the heating and melting temperature of the laminate (A) is preferably 130 to 230°C, more preferably 160 to 210°C, and further preferably 170 to 200°C.

It is still more preferable that the first resin layer and the second resin layer are the same type of substrate. In terms of the above-mentioned forms, it is preferable that both the substrate and the sealant are made of polypropylene, or that both the substrate and the sealant are made of polyethylene.

In one embodiment, the melt mass flow rate (MFR) of the laminate (A) is a value measured in accordance with JIS K 7210 after crushing to a length of 5 mm to 10 mm on one side. It is noted that the measurement conditions such as temperature may be measured under conditions corresponding to the component with the highest content ratio in the laminate (A). The MFR of the laminate (A) is preferably 0.5 to 15 g/10 min, more preferably 1.0 to 14 g/10 min, and further preferably 3 to 13 g/10 min. In the case where the above-mentioned MFR is within the above range, the fluidity during melting is improved, making it easier to suppress burning.

<1-3> Recycled plastic (B)

In one embodiment, the melt mass flow rate (MFR) of the recycled plastic (B) obtained by the above-mentioned manufacturing method is greatly affected by the thermal history, such as the temperature during molding and the cooling speed. The MFR may be adjusted according to the composition of the laminate and the conditions during recycling. In one embodiment, the MFR of the recycled plastic (B) is preferably 0.5 to 20 g/10 min, and more preferably 3 to 15 g/10 min. In the case where the MFR is within the above range, it is possible to provide materials suitable for various molding processes. The manufacturing method of this embodiment preferably includes a step of adjusting the MFR of the recycled plastic (B) by changing the thermal history.

<2> Molded article

One embodiment of the present invention relates to a molded article obtained by molding the recycled plastic (B) obtained by the above-mentioned embodiment. Further, another embodiment of the present invention relates to a manufacturing method of a recycled plastic molded article, and this manufacturing method includes manufacturing a recycled plastic by the manufacturing method of recycled plastic of the above-mentioned embodiment, and molding the above-mentioned recycled plastic.

The molding method for obtaining the molded article is not particularly limited, and examples include injection molding, extrusion molding, blow molding, and compression molding. The molded articles may be used for various applications such as home appliances, stationery, automotive parts, toys, sports equipment, medical supplies, and construction materials.

Example

The present invention will be described in detail below with reference to examples, but the present invention is not limited to these examples. It is noted that in the present invention, "parts" and "%" represent "parts by mass" and "mass%", respectively, unless otherwise noted.

The various characteristics described in the following examples are values measured by the methods described below.

(Hydroxyl value)

The hydroxyl value is the number of mg of potassium hydroxide required to neutralize the acetic acid combined with the hydroxyl group when 1 g of the sample is acetylated, and it was measured by the method described in JIS K 0070.

(Acid value)

The acid value is the number of mg of potassium hydroxide required to neutralize the free fatty acids, resin acids, and the like contained in 1 g of the sample, and it was measured by the method described in JIS K 0070.

(Amine value)

The amine value is the number of mg of potassium hydroxide equivalent to the amount of hydrochloric acid required to neutralize the amino groups contained in 1 g of the sample, and it was measured in accordance with JIS K 0070. Specifically, the measurement was performed according to the following procedure.

First, 0.5 to 2 g of the sample was precisely weighed (sample solid content: S g). Next, 50 mL of a mixed solution of methanol/methyl ethyl ketone = 60/40 (mass ratio) was added to the weighed sample to dissolve it. Bromophenol blue was added to the obtained solution as an indicator, and the resulting solution was titrated with 0.2 mol/L ethanolic hydrochloric acid solution (titer: f). The point at which the color of the solution changed from green to yellow was taken as the end point, and the titration volume (A mL) at this time was used to calculate the amine value according to the following formula.

$$\text{(Formula) Amine value} = (A \times f \times 0.2 \times 56.108) / S \text{ [mgKOH/g]}$$

(Weight average molecular weight)

The weight average molecular weight was determined as a converted molecular weight using polystyrene as a standard substance by measuring the molecular weight distribution using a gel permeation chromatography (GPC) apparatus (HLC-8220 manufactured by Tosoh Corporation). The measurement conditions are shown below.

Column: The following columns were used in series.

TSKgel SuperAW2500 manufactured by Tosoh Corporation
TSKgel SuperAW3000 manufactured by Tosoh Corporation
TSKgel SuperAW4000 manufactured by Tosoh Corporation
TSKgel guard column SuperAWH manufactured by Tosoh Corporation

Detector: RI (differential refractometer)

Measurement conditions: Column temperature 40°C
Eluent: Tetrahydrofuran
Flow rate: 1.0 mL/min

(Glass transition point (Tg))

The glass transition point was determined by differential scanning calorimetry (DSC) measurement. The measurement was performed using a DSC8231 manufactured by Rigaku Corporation, with a measurement temperature range of -70 to 250°C and a heating rate of 10°C/min. The glass transition point was defined as the midpoint (inflection point) of the baseline shift based on the glass transition in the DSC curve.

(Chlorine content ratio)

The chlorine content was measured in accordance with JIS K 0127 (2013). Specifically, ink or binder resin was coated on a transparent substrate, respectively, to form a coating film with a thickness of 2.0 μm. The coating was dried at 80°C, and 0.5 g was scraped off. The scraped coating film was pretreated by combustion method, and the chlorine content of the obtained sample was quantified by ion chromatography to determine the chlorine content ratio.

(Measurement of Melt Mass Flow Rate (MFR))

The MFR was measured according to the method described in JIS K 7210-1:2014. For the measurement of laminate (A), it was crushed into pieces with edge lengths of 5 mm to 10 mm. The measurement conditions, such as temperature, were conducted under conditions corresponding to the component with the highest content ratio in laminate (A).

(Water content measurement method)

The water content measurement method was conducted in accordance with JIS K 0068 (2001). The measurement equipment and reagents are shown below.

Measurement equipment: Karl Fischer moisture meter MKC-710D (manufactured by Kyoto Electronics Manufacturing Co., Ltd.)
: Evaporator ADP-611 (manufactured by Kyoto Electronics Manufacturing Co., Ltd.) Karl Fischer reagent: Aquamicron Water Standard 1 (manufactured by Kyoto Electronics Manufacturing Co., Ltd.)

<1>Manufacturing of binder resin

(Synthesis of urethane resin)

(Synthesis Example 1) Urethane resin PU1

100 parts of a polyester polyol (hereinafter referred to as "MPD/SA") with a number average molecular weight of 2,000, which is a condensation product of 3-methyl-1,5-pentanediol (MPD) and sebacic acid (SA), 1 part of 1,4-butanediol (hereinafter referred to as "1,4-BD"), 28.5 parts of isophorone diisocyanate (hereinafter referred to as "IPDI"), and 32.1 parts of ethyl acetate were mixed and reacted at 90°C for 5 hours under a nitrogen atmosphere to obtain a urethane prepolymer with a terminal isocyanate.
Subsequently, 11.0 parts of isophorone diamine (hereinafter referred to as "IPDA"), 1.0 part of N-(2-aminoethyl) ethanolamine (hereinafter referred to as "AEA"), 1.0 part of dibutylamine (hereinafter referred to as "DBA"), and 298.1 parts of mixed solvent 1 (ethyl acetate/isopropanol = 70/30 (mass ratio)) were mixed under stirring, and the obtained urethane prepolymer with a terminal isocyanate was gradually added at 40°C. The mixture was reacted at 80°C for 1 hour to obtain a solution of urethane resin PU1 with a solid content of 30 mass%, an amine value of 6.5 mgKOH/g, a hydroxyl value of 3.8 mgKOH/g, and a weight average molecular weight of 50,000. The chlorine content ratio of urethane resin PU1 was 0 mass%.
In the preparation examples of inks described later, the following components were used in addition to the previously prepared urethane resin.

· PVB solution: A 30% solid content solution of polyvinyl butyral resin in a mixed solvent of ethyl acetate/isopropanol = 1/1. The above-mentioned polyvinyl butyral resin has vinyl alcohol units, vinyl acetate units, and vinyl butyral units, and contains 73 mass% of butyral ring groups. The glass transition point of the above-mentioned polyvinyl butyral resin is 70°C, the weight average molecular weight is 50,000, the chlorine content is 0 mass%, and the nitrification degree is 0 mass%.

· Vinyl chloride-vinyl acetate solution: A 30% solid content ethyl acetate solution of vinyl chloride-vinyl acetate copolymer resin. The vinyl chloride-vinyl acetate copolymer resin is Solbin TA3 manufactured by Nissin Chemical Industry Co., Ltd., with a chlorine content ratio of 47.1 mass% and a nitrification degree of 0 mass%.

<2>Preparation of Ink

(Gravure ink preparation example 1) Gravure ink X1

40 parts of urethane resin PU1 solution, 15 parts of polyvinyl butyral resin (PVB) solution, 5 parts of C.I. Pigment Blue 15:3 (manufactured by Toyocolor Co., Ltd., product name: LIONOL BLUE FG-7330, chlorine content ratio 0 mass%, nitrification degree 0 mass%), 0.8 parts of silica particles (hydrophilic silica, average particle diameter 3.0 $\mu$m, specific surface area 300 m$^2$/g), and 36 parts of mixed solvent 2 (n-propyl acetate (NPAC)/isopropanol (IPA) = 70/30 (mass ratio)) were mixed and dispersed for 20 minutes in a bead mill to obtain a pigment dispersion.

To the obtained pigment dispersion, 0.8 parts of chlorinated polypropylene solution, 3.5 parts of propylene glycol monomethyl ether (boiling point 121.0°C), and 1.5 parts of water were added and stirred to obtain organic solvent-based gravure ink X1.

(Gravure ink preparation example 2) Gravure ink X2

40 parts of urethane resin PU1 solution, 10 parts of polyvinyl butyral resin (PVB) solution, 10 parts of C.I. Pigment Blue 15:3 (manufactured by Toyocolor Co., Ltd., product name: LIONOL BLUE FG-7330, chlorine content 0 mass%, nitrification degree 0 mass%), 0.8 parts of silica particles (hydrophilic silica, average particle diameter 3.0 $\mu$m, specific surface area 300 m$^2$/g), and 36 parts of mixed solvent 2 (n-propyl acetate/isopropanol = 70/30 (mass ratio)) were mixed and dispersed for 20 minutes in a bead mill to obtain a pigment dispersion.

To the obtained pigment dispersion, 0.8 parts of chlorinated polypropylene solution, 3.5 parts of propylene glycol monomethyl ether (boiling point 121.0°C), and 1.5 parts of water were added and stirred to obtain organic solvent-based gravure ink X2.

(Gravure ink preparation example 3) Gravure ink X3

40 parts of urethane resin PU1 solution, 11 parts of polyvinyl butyral resin (PVB) solution, 4 parts of vinyl chloride-vinyl acetate solution (PVC) solution, 5 parts of C.I. Pigment Blue 15:3 (manufactured by Toyocolor Co., Ltd., product name: LIONOL BLUE FG-7330, chlorine content 0 mass%, nitrification degree 0 mass%), 0.8 parts of silica particles (hydrophilic silica, average particle diameter 3.0 $\mu$m, specific surface area 300 m$^2$/g), and 36 parts of mixed solvent 2 (n-propyl acetate/isopropanol = 70/30 (mass ratio)) were mixed and dispersed for 20 minutes in a bead mill to obtain a pigment dispersion.

To the obtained pigment dispersion, 0.8 parts of chlorinated polypropylene solution, 3.5 parts of propylene glycol monomethyl ether (boiling point 121.0°C), and 1.5 parts of water were added and stirred to obtain organic solvent-based gravure ink X3.

(Gravure ink preparation example 4) Gravure ink X4

40 parts of urethane resin PU1 solution, 4 parts of polyvinyl butyral resin (PVB) solution, 11 parts of vinyl chloride-vinyl acetate solution (PVC) solution, 5 parts of C.I. Pigment Blue 15:3 (manufactured by Toyocolor Co., Ltd., product name: LIONOL BLUE FG-7330, chlorine content 0 mass%, nitrification degree 0 mass%), 0.8 parts of silica particles (hydrophilic silica, average particle diameter 3.0 $\mu$m, specific surface area 300 m$^2$/g), and 36 parts of mixed solvent 2 (n-propyl acetate/isopropanol = 70/30 (mass ratio)) were mixed and dispersed for 20 minutes in a bead mill to obtain a pigment dispersion.

To the obtained pigment dispersion, 0.8 parts of chlorinated polypropylene solution, 3.5 parts of propylene glycol monomethyl ether (boiling point 121.0°C), and 1.5 parts of water were added and stirred to obtain organic solvent-based gravure ink X4.

[Table 1]

Table 1

| | | | | Chlorine content % | Ink preparation example | | | |
|---|---|---|---|---|---|---|---|---|
| | | | | | 1 | 2 | 3 | 4 |
| | | | | | X1 | X2 | X3 | X4 |
| Compound configuration | Binder resin | Urethane resin (A) | PU1 solution | 0 | 40 | 40 | 40 | 40 |
| | | Resin (B) | PVB solution | 0 | 15 | 10 | 11 | 4 |
| | | | Vinyl chloride-vinyl acetate solution | 47.1 | | | 4 | 11 |
| | | | Chlorinated polypropylene solution | 30 | 0.8 | 0.8 | 0.8 | 0.8 |
| | Pigment | | C.I. Pigment Blue 15:3 | 0 | 5 | 10 | 5 | 5 |
| | Organic solvents with boiling points of 100 to 160°C | | Propylene glycol monomethyl ether (boiling point 121°C) | - | 3.5 | 3.5 | 3.5 | 3.5 |
| | Water | | | - | 1.5 | 1.5 | 1.5 | 1.5 |
| | Silica particles | | | - | 0.8 | 0.8 | 0.8 | 0.8 |
| | Organic Solvent | | Mixed solvent 2 (NPAC/IPA) | - | 33.4 | 33.4 | 33.4 | 33.4 |
| | Total (%) | | | - | 100 | 100 | 100 | 100 |
| Chlorine content of binder resin (%) | | | | | 0.43 | 0.47 | 3.81 | 9.72 |
| Nitrification degree of binder resin (%) | | | | | 0.0 | 0.0 | 0.0 | 0.0 |
| Chlorine content in ink solids (%) | | | | | 0.32 | 0.28 | 2.83 | 7.22 |
| Pigment in ink solids (%) | | | | | 22.2 | 38.4 | 22.2 | 22.2 |

<3>Manufacturing example of laminate (A)

(Manufacturing example 1 of laminate (A)) Laminate A1

Gravure ink X1 was diluted by adding ethyl acetate/isopropyl alcohol mixed solvent (mass ratio 70/30) to a Zahn cup #3 (manufactured by Rigosha & Co., Ltd.) for 15 seconds (25°C). Subsequently, the diluted gravure ink X1 was printed on a corona-treated biaxially-stretched polypropylene (OPP) film (thickness 20 $\mu$m) using a gravure printing machine equipped with a gravure plate with a depth of 35 $\mu$m, dried at 50°C, and a laminate of OPP/printing layer was obtained.

Subsequently, using a dry laminating machine, a polyether-based reactive urethane adhesive ("TM-340V/CAT-29B", manufactured by Toyo-Morton, Ltd.) was coated on the printing layer of this laminate, and the solvent was dried in an oven to form an adhesive layer. Thereafter, a non-stretched polypropylene (CPP) film (thickness 30 $\mu$m) was bonded onto this adhesive layer at a line speed of 40 m/min, and kept warm at 40°C for 1 day. In this manner, laminate A1 having a multilayer structure of OPP/printing layer/adhesive layer/CPP was obtained. The coating amount after drying of the printing layer and the adhesive layer was 2.5 g/m$^2$ each. The MFR value of laminate A1 is as shown in Table 1.

(Manufacturing example 2 of laminate (A)) Laminate A2

Laminate A2 having a multilayer structure of OPP/printing layer/adhesive layer/CPP was obtained in the same manner as the manufacturing process of laminate A1, except that gravure ink X1 was changed to gravure ink X2. The coating amount after drying of the printing layer and the adhesive layer was 2.5 g/m$^2$ each.

(Manufacturing example 3 of laminate (A)) Laminate A3

Laminate A3 having a multilayer structure of OPP/printing layer/adhesive layer/CPP was obtained in the same manner as the manufacturing process of laminate A1, except that gravure ink X1 was changed to gravure ink X3. The coating amount after drying of the printing layer and the adhesive layer was 2.5 g/m$^2$ each.

(Manufacturing example 4 of laminate (A)) Laminate A4

Laminate A4 having a multilayer structure of OPP/printing layer/adhesive layer/CPP was obtained in the same manner as the manufacturing process of laminate A1, except that gravure ink X1 was changed to gravure ink X4. The coating amount after drying of the printing layer and the adhesive layer was 2.5 g/m$^2$ each.

(Manufacturing example 5 of laminate (A)) Laminate A5

A laminate of OPP/printing layer was obtained by the same procedure as the printing process in the manufacturing process of laminate A1. Subsequently, using a solvent-free laminating machine, an adhesive layer was formed by coating a reactive urethane adhesive (solvent-free adhesive "EA-N373 A/B" manufactured by Toyo-Morton, Ltd.) on the printing layer of this laminate. Thereafter, a non-stretched polypropylene (CPP) film (thickness 30 μm) was bonded onto this adhesive layer at a line speed of 40 m/min, and kept warm at 40°C for 1 day. In this manner, laminate A5 having a multilayer structure of OPP/printing layer/adhesive layer/CPP was obtained. The coating amount after drying of the printing layer and the adhesive layer was 2.5 g/m$^2$ each.

(Manufacturing example 6 of laminate (A)) Laminate A6

Gravure ink X1 was diluted with ethyl acetate/isopropyl alcohol mixed solvent (mass ratio 70/30) in a Zahn cup #3 (manufactured by Rigosha & Co., Ltd.) for 15 seconds (25°C). Subsequently, the diluted gravure ink X1 was printed twice on a corona-treated biaxially-stretched polypropylene (OPP) film (thickness 20 μm) using a gravure printing machine equipped with a gravure plate with a depth of 35 μm, dried at 50°C, and a laminate of OPP/printing layer was obtained. Subsequently, using a dry laminating machine, the above-mentioned reactive urethane adhesive ("TM-340V/CAT-29B", manufactured by Toyo-Morton, Ltd.) was coated on the printing layer of this laminate, and the solvent was dried in an oven to form an adhesive layer. Thereafter, a non-stretched polypropylene (CPP) film (thickness 20 μm) was bonded onto this adhesive layer at a line speed of 40 m/min, and kept warm at 40°C for 1 day. In this manner, laminate A6 having a multilayer structure of OPP/printing layer/adhesive layer/CPP was obtained. The coating amount after drying of the printing layer was 5.0 g/m$^2$, and the coating amount after drying of the adhesive layer was 2.5 g/m$^2$. The MFR value of laminate A6 is as shown in Table 1.

(Manufacturing example 7 of laminate (A)) Laminate A7

Laminate A7 having a multilayer structure of OPP/printing layer/adhesive layer/CPP was obtained in the same manner as the manufacturing process of laminate A1, except that the sealant was changed to a non-stretched polypropylene (CPP) film (thickness 60 μm). The coating amount after drying of the printing layer and the adhesive layer was 2.5 g/m$^2$ each.

(Manufacturing example 8 of laminate (A)) Laminate A8

A laminate of OPP/printing layer was obtained by the same procedure as the printing process in the manufacturing process of laminate A1. Subsequently, using an extrusion laminating machine, a solution of polyethyleneimine-based anchor coating agent (EL-420 manufactured by Toyo-Morton, Ltd.) diluted with a solvent consisting of methanol : water = 70:30 (mass ratio) was coated on the printing layer of this laminate, and the solvent was dried in an oven. Here, the above-mentioned diluted solution had a solid content of 1% (weight ratio, methanol/water = 70/30), and the coating amount was 0.02 g/m$^2$. Then, polypropylene resin (Novatec FL02A, manufactured by Japan Polypropylene Corporation, having adhesive function) (thickness 15 μm) melted at 330°C was overlaid on the coated surface of the above-mentioned solution, and simultaneously, a non-stretched polypropylene (CPP) film (thickness 30 μm) was bonded. In this manner, laminate A8 having a multilayer structure of OPP/printing layer/AC agent/PP resin layer/CPP was obtained. The coating amount after drying of the printing layer was 2.5 g/m$^2$.

(Manufacturing example 9 of laminate (A)) Laminate A9

A laminate of OPP/printing layer was obtained by the same procedure as the printing process in the manufacturing process of laminate A1. Subsequently, using a dry laminating machine, an adhesive ("TM-340V/CAT-29B" manufactured by Toyo-Morton, Ltd.) was coated on the OPP surface of this laminate, and the solvent was dried in an oven to form an adhesive layer. Thereafter, a non-stretched polypropylene (CPP) film (thickness 30 $\mu$m) was bonded onto this adhesive layer at a line speed of 40 m/min, and kept warm at 40°C for 1 day. In this manner, laminate A9 having a multilayer structure of printing layer/OPP/adhesive layer/CPP was obtained. The coating amount after drying of the printing layer and the adhesive layer was 2.5 g/m$^2$ each.

(Manufacturing example 10 of laminate (A)) Laminate A10

Laminate A10 with a structure of HDPE/printing layer/adhesive layer/LLDPE was obtained in the same manner as the manufacturing process of laminate A1, except that the substrate was changed to a high-density polyethylene film (HDPE) film (thickness 20 $\mu$m) and the sealant was changed to a linear low-density polyethylene (LLDPE) film (thickness 150 $\mu$m). The coating amount after drying of the printing layer and the adhesive layer was 2.5 g/m$^2$ each.

(Manufacturing example 11 of laminate (A)) Laminate A11

In the manufacturing process of laminate A1, the substrate was changed to a linear low-density polyethylene film (thickness 40 $\mu$m), and the sealant was changed to a linear low-density polyethylene (LLDPE) film (thickness 40 $\mu$m). Except for these changes, laminate A11 having a multilayer structure of LLDPE/printing layer/adhesive layer/LLDPE was obtained in the same manner as the manufacturing process of laminate A1. The coating amount after drying of the printing layer and the adhesive layer was 2.5 g/m$^2$ each.

(Comparative manufacturing example 1) Laminate S1

Laminate S1 having a multilayer structure of NY/printing layer/adhesive layer/CPP was obtained in the same manner as the manufacturing process of laminate A1, except that the substrate was changed to a nylon (NY) film (thickness 15 $\mu$m). The coating amount after drying of the printing layer and the adhesive layer was 2.5 g/m$^2$ each.

The structures of laminates A1 to A11 and laminate S1 obtained in the above-mentioned manufacturing examples are shown in Table 2. The polyolefin resin content ratio described in Table 2 is the proportion of polyolefin resin content with the total mass of the laminate as a reference, and specifically, it is a value calculated as follows.

(Polyolefin resin content ratio)

The content ratio of polyolefin resin in plastic laminate (A) was calculated using the following formula (1).

(Mass of polyolefin resin in plastic laminate (A))/(Mass of plastic laminate (A)) $\times$ 100          Formula (1):

More specifically, the following Formulae (I) to (III) were applied.

Mass per 1 m$^2$ of plastic laminate (A) [g] = (Substrate thickness) $\times$ (Substrate density) + (Ink coating amount) + (Adhesive coating amount (excluding molten polypropylene)) + (Molten polypropylene thickness) $\times$ (Molten polypropylene density) + (Sealant thickness) $\times$ (Sealant density)          Formula (I):

Mass of polyolefin resin in plastic laminate (A) [g] = (Substrate thickness) $\times$ (Substrate density) + (Molten polypropylene thickness) $\times$ (Molten polypropylene density) + (Sealant thickness) $\times$ (Sealant density)          Formula (II):

Content ratio of polyolefin resin in plastic laminate (A) [%] = (Mass of polyolefin resin in plastic laminate (A))/(Mass per 1 m$^2$ of plastic laminate (A)) $\times$ 100          Formula (III):

It is noted that the densities of the substrate, molten polypropylene, and sealant used to constitute the laminate are as follows.

- Corona-treated biaxially-stretched polypropylene (OPP) film (thickness 20 μm) density: 0.91 g/cm$^3$
- High-density polyethylene (HDPE) film (thickness 20 μm) density: 0.94 g/cm$^3$
- Linear low-density polyethylene film (thickness 40 μm) density: 0.91 g/cm$^3$
- Nylon (NY) film (thickness 15 μm) density: 1.15 g/cm$^3$
- Molten polypropylene density: 0.90 g/cm$^3$
- Non-stretched polypropylene (CPP) film (thickness 20 μm) density: 0.90 g/cm$^3$
- Non-stretched polypropylene (CPP) film (thickness 30 μm) density: 0.90 g/cm$^3$
- Non-stretched polypropylene (CPP) film (thickness 60 μm) density: 0.90 g/cm$^3$
- Linear low-density polyethylene (LLDPE) film (thickness 150 μm) density: 0.91 g/cm$^3$
- Linear low-density polyethylene (LLDPE) film (thickness 40 μm) density: 0.91 g/cm$^3$

[Table 2]

Table 2

| | Laminate | Laminate structure | Substrate | | | | Ink | | | | Adhesive (amount applied) | | | | Sealant | | Olefin content | Chlorine content % |
|---|---|---|---|---|---|---|---|---|---|---|---|---|---|---|---|---|---|---|
| | | | OPP | HDPE | LLDPE | NY | X1 | X2 | X3 | X4 | AC agent EL420 | Urethane adhesive TM340/CAT29B | Urethane adhesive EA-N373 A/B | Molten PP | CPP | LLDPE | | |
| Manufacturing Example 1 | A1 | OPP(20)/printing layer/adhesive layer/CPP(30) | 20 | | | | 2.5 | | | | | 2.5 | | | 30 | | 90.0 | 0.02 |
| Manufacturing Example 2 | A2 | OPP(20)/printing layer/adhesive layer/CPP(30) | 20 | | | | | 2.5 | | | | 2.5 | | | 30 | | 90.0 | 0.01 |
| Manufacturing Example 3 | A3 | OPP(20)/printing layer/adhesive layer/CPP(30) | 20 | | | | | | 2.5 | | | 2.5 | | | 30 | | 90.0 | 0.14 |
| Manufacturing Example 4 | A4 | OPP(20)/printing layer/adhesive layer/CPP(30) | 20 | | | | | | | 2.5 | | 2.5 | | | 30 | | 90.0 | 0.36 |
| Manufacturing Example 5 | A5 | OPP(20)/printing layer/adhesive layer/CPP(30) | 20 | | | | 2.5 | | | | | | 2.5 | | 30 | | 94.8 | 0.02 |
| Manufacturing Example 6 | A6 | OPP(20)/printing layer/adhesive layer/CPP(20) | 20 | | | | 5.0 | | | | | 3.0 | | | 20 | | 81.9 | 0.04 |
| Manufacturing Example 7 | A7 | OPP(20)/printing layer/adhesive layer/CPP(60) | 20 | | | | 2.5 | | | | | 2.5 | | | 60 | | 93.5 | 0.01 |
| Manufacturing Example 8 | A8 | OPP(20)/printing layer/PP resin layer(15)/CPP(30) | 20 | | | | 2.5 | | | | 0.02 | | | 15.0 | 30 | | 95.9 | 0.01 |
| Manufacturing Example 9 | A9 | Printing layer/OPP(20)/adhesive layer/CPP(30) | 20 | | | | 2.5 | | | | | 2.5 | | | 30 | | 90.0 | 0.02 |
| Manufacturing Example 10 | A10 | HDPE(20)/printing layer/-adhesive layer/LLDPE(150) | | 20 | | | 2.5 | | | | | 2.5 | | | | 150 | 96.9 | 0.00 |
| Manufacturing Example 11 | A11 | LLDPE(40)/printing layer/-adhesive layer/LLDPE(40) | | | 40 | | 2.5 | | | | | 2.5 | | | | 40 | 93.6 | 0.01 |
| Comparative manufacturing example 1 | S1 | NY(15)/printing layer/adhesive layer/CPP(60) | | | | 15 | 2.5 | | | | | 2.5 | | | 60 | | 70.8 | 0.01 |

28

EP 4 578 626 A1

<4>Manufacturing of Recycled plastic (B)

(Example 1)

(a) Manufacturing of Recycled plastic B1

The laminate A1 was cut into 2 cm × 2 cm size, washed with water and dehydrated, and further hot-air dried until the water content became 0.5%. Subsequently, this laminate A1 and an antioxidant (Irganox 1010) were fed into the melting and kneading unit of a twin-screw extruder (manufactured by The Japan Steel Works, Ltd., screw diameter: 34 mm, minimum clearance distance between cylinder inner wall and screw: 0.4 mm), and these were melted and kneaded at a screw rotation number of 200 rpm at 230°C for 30 seconds to form a recycled resin composition (a1). It is noted that the supply amounts of laminate A1 and antioxidant (Irganox1010) were adjusted so that the content of the antioxidant was 0.2 mass% based on 100 mass% of the recycled resin composition (a1).

Subsequently, the recycled resin composition (a1) was passed through a 120-mesh filter and extruded from the ejection unit of the extrusion device. The pressure at the ejection unit immediately after the start of extrusion was 2 MPa.

The extruded recycled resin composition (a) was immediately cut by a pelletizer and cooled by immersion in cold water. In this manner, pellet B1 was obtained as recycled plastic (B) recycled from laminate A1.

(b) Manufacturing of Recycled plastic BB1

The laminate A1 was cut into 2 cm × 2 cm size, washed with water and dehydrated, and further hot-air dried until the water content became 0.5%. Subsequently, this laminate A1 and an antioxidant (Irganox 1010) were fed into the melting and kneading unit of a twin-screw extruder (manufactured by The Japan Steel Works, Ltd., screw diameter: 34 mm, minimum clearance distance between cylinder inner wall and screw: 0.4 mm), and were melted and kneaded at a screw rotation number of 200 rpm at 230°C for 30 seconds to form a recycled resin composition (a1). It is noted that the input amounts of laminate A1 and antioxidant (Irganox 1010) were adjusted so that the content of the antioxidant was 0.2% based on 100 mass% of the recycled resin composition (a).

Subsequently, the recycled resin composition (a1) was passed through a 120-mesh filter and extruded from the ejection unit of the extrusion device. The extrusion was continued for 5 hours (long run) while maintaining the extrusion flow rate of the recycled resin composition (a1) at 20 Kg/h (hour), and then the extruded recycled resin composition (a1) was immediately cut by a pelletizer and cooled by immersion in cold water. The pressure at the ejection unit after the long run was 4 MPa. In this manner, pellet BB1 was obtained as recycled plastic (B) recycled from laminate A1 by long run.

(Examples 2 to 20) Manufacturing of Recycled plastics B2 to B20, BB2 to BB20

The conditions for manufacturing recycled plastics B1 and BB1 described in Example 1 were changed to the conditions described in Table 1. Except for this, pellets B2 to B20 and BB2 to BB20 were obtained as recycled plastics recycled from laminates in the same manner as in Example 1. The details of the antioxidants described in Table 1 are as follows.

- Irganox 1010: phenol-based antioxidant (manufactured by BASF)
- Irgafos 168: Phosphite antioxidant (manufactured by BASF)
- Norac CD: Amine-based antioxidant (manufactured by Ouchi Shinko Chemical Industrial Co., Ltd.)

(Example 21) Manufacturing of Recycled plastics B21, BB21

A laminate was prepared and used in which the substrate of laminate A1 used in Example 1 was changed to PVA-coated OPP film (product name A-OP BH, manufactured by Mitsui Chemicals Tohcello, Inc., thickness 20 $\mu$m, density 0.91 g/cm$^3$). Except for this, pellets B21 and BB21 were obtained as recycled plastics recycled from laminates in the same manner as in Example 1.

(Example 22) Manufacturing of Recycled plastics B22, BB22

A laminate was prepared and used in which the substrate of laminate A1 used in Example 1 was changed to barrier OPP film (ECO-B manufactured by Futamura Chemical Co., Ltd., thickness 20 $\mu$m, density 0.91 g/cm$^3$). Except for this, pellets B22 and BB22 were obtained as recycled plastics recycled from laminates in the same manner as in Example 1.

(Example 23) Manufacturing of Recycled plastics B23, BB23

A laminate was prepared and used in which the substrate of laminate A1 used in Example 1 was changed to inorganic compound vapor-deposited OPP film (thickness 20 $\mu$m, density 0.91 g/cm$^3$). Except for this, pellets B23 and BB23 were obtained as recycled plastics recycled from laminates in the same manner as in Example 1.

(Comparative Examples 1 to 4) Recycled plastics C1 to C4, CC1 to CC4

The conditions for manufacturing recycled plastics B1 and BB1 described in Example 1 were changed to the conditions described in Table 1. Except for this, pellets C1 to C4 and CC1 to CC4 were obtained as recycled plastics recycled from laminates in the same manner as the manufacturing of recycled plastics B1 and BB1 described in Example 1. It is noted that the rotation number of 1100 rpm is equivalent to a shear rate of 4900 sec$^{-1}$.

<5>Evaluation of Recycled Plastics

<5-1>Number of foreign substances

The recycled plastics (pellets) obtained in the above-mentioned examples and comparative examples were each extrusion-molded at 230°C using a T-die extruder to produce a film with a thickness of 50 $\mu$m.

The obtained films were visually observed, and the number of foreign substances (foreign substances of about 100 $\mu$m or larger that may be visually identified) per 0.5 m$^2$ was counted and evaluated according to the following criteria. The evaluation results are shown in Table 3. It is noted that although not shown in Table 3, the evaluation results for B21 to B23 were the same as those for B1, respectively. Further, the evaluation results for BB21 to BB23 were also the same as those for BB1, respectively.

(Evaluation results)

A (Good): Less than 50 foreign substances,
B (Acceptable): 50 or more but less than 100 foreign substances,
C (Acceptable): 100 or more but less than 200 foreign substances,
D (Poor): 200 or more foreign substances

<5-2>Evaluation of burning of recycled plastic

The recycled plastics (pellets) obtained in the above-mentioned examples and comparative examples were each extrusion-molded at 230°C using a T-die extruder to produce a film with a thickness of 50 $\mu$m.

The surface of the obtained films was visually observed, and the visually identifiable burning was evaluated according to the following criteria. The evaluation results are shown in Table 3. It is noted that although not shown in Table 3, the evaluation results for B21 to B23 were the same as those for B1, respectively. Further, the evaluation results for BB21 to BB23 were also the same as those for BB1, respectively.

(Evaluation criteria)

A (Good): No burning (no color change)
B (Acceptable): Slight burning observed (areas partially discolored to light brown observed)
C (Acceptable): Burning observed but within acceptable range (multiple areas or overall discoloration to light brown observed)
D (Poor): Unacceptable burning observed in many areas (black or brown foreign matter or discolored areas observed)

<5-3>Formability of recycled plastic

The recycled plastics (pellets) B1 to B19 obtained in the examples and comparative examples were blow-molded at 230°C using a blow molding machine to create molded articles in the shape of bottles with a thickness of 1 mm. For each type, 50 bottles were visually observed, and the number of bottles with visually identifiable foaming was counted.

Furthermore, the formability was evaluated according to the following evaluation criteria. The evaluation results are shown in Table 3. It is noted that although not shown in Table 3, the evaluation results for B21 to B23 were the same as those for B1, respectively. Further, the evaluation results for BB21 to BB23 were also the same as those for BB 1, respectively.

(Evaluation criteria)

A (Good): Among 50 bottles, foaming was observed in 1 bottle or less
B (Acceptable): Among 50 bottles, foaming was observed in 2 to 3 bottles
C (Acceptable): Among 50 bottles, foaming was observed in 4 to 5 bottles
D (Poor): Among 50 bottles, foaming was observed in 6 bottles or more

[Table 3]

Table 3

| | | Laminate (A) | | | | | | Antioxidant | Melting Temperature °C | Rotation number rpm | Initial Ejection Pressure Mpa | Ejection Pressure Over time Mpa | Recycled plastic immediately after extrusion | | | | Recycled plastic after extrusion over time | | |
|---|---|---|---|---|---|---|---|---|---|---|---|---|---|---|---|---|---|---|---|
| | | Structure | MFR | Olefin content % | Chlorine Content % | Water content (%) | | | | | | | Recycled Plastic (B) | Film foreign substance | Film burning | Bottle foaming | Recycled Plastic (B) | Foreign substance over time | Burning over time |
| Example 1 | A1 | OPP(20)/printing layer/adhesive layer/CPP(30) | 7 | 90 | 0.02 | 0.5% | Irgano×1010 | 230 | 200 | 2 | 4 | B1 | A | A | A | BB1 | A | A |
| Example 2 | A1 | OPP(20)/printing layer/adhesive layer/CPP(30) | 7 | 90 | 0.02 | 0.5% | Irgano×1010 | 200 | 200 | 3 | 6 | B2 | A | A | A | BB2 | B | A |
| Example 3 | A1 | OPP(20)/printing layer/adhesive layer/CPP(30) | 7 | 90 | 0.02 | 0.5% | Irgano×1010 | 280 | 200 | 1 | 6 | B3 | A | B | A | BB3 | B | B |
| Example 4 | A1 | OPP(20)/printing layer/adhesive layer/CPP(30) | 7 | 90 | 0.02 | 2.5% | Irgano×1010 | 230 | 200 | 3 | 6 | B4 | A | A | B | BB4 | B | A |
| Example 5 | A1 | OPP(20)/printing layer/adhesive layer/CPP(30) | 7 | 90 | 0.02 | 0.5% | Irgano×1010 | 230 | 60 | 3 | 5 | B5 | A | B | A | BB5 | B | B |
| Example 6 | A1 | OPP(20)/printing layer/adhesive layer/CPP(30) | 7 | 90 | 0.02 | 0.5% | Irgano×1010 | 230 | 500 | 4 | 8 | B6 | A | A | A | BB6 | A | A |
| Example 7 | A1 | OPP(20)/printing layer/adhesive layer/CPP(30) | 7 | 90 | 0.02 | 0.5% | Irgano×1010 | 230 | 850 | 6 | 15 | B7 | A | B | A | BB7 | C | B |
| Example 8 | A2 | OPP(20)/printing layer/adhesive layer/CPP(30) | 7 | 90 | 0.01 | 0.5% | Irgano×1010 | 230 | 200 | 5 | 9 | B8 | B | A | A | BB8 | B | A |
| Example 9 | A3 | OPP(20)/printing layer/adhesive layer/CPP(30) | 7 | 90 | 0.14 | 0.5% | Irgano×1010 | 230 | 200 | 4 | 8 | B9 | A | A | B | BB9 | B | A |

(continued)

| | | Laminate (A) | | | | | | Antioxidant | Melting Temperature °C | Rotation number rpm | Initial Ejection Pressure Mpa | Ejection Pressure Over time Mpa | Recycled plastic immediately after extrusion | | | | Recycled plastic after extrusion over time | | |
|---|---|---|---|---|---|---|---|---|---|---|---|---|---|---|---|---|---|---|---|
| | | Structure | MFR | Olefin content % | Chlorine Content % | Water content (%) | | | | | | | Recycled Plastic (B) | Film foreign substance | Film burning | Bottle foaming | Recycled Plastic (B) | Foreign substance over time | Burning over time |
| Example 10 | A4 | OPP(20)/printing layer/adhesive layer/CPP(30) | 7 | 90 | 0.36 | 0.5% | Irgano×1010 | 230 | 200 | 5 | 9 | B10 | B | A | C | BB10 | C | A |
| Example 11 | A5 | OPP(20)/printing layer/adhesive layer/CPP(30) | 8 | 90 | 0.02 | 0.5% | Irgano×1010 | 230 | 200 | 3 | 4 | B11 | A | A | A | BB11 | A | A |
| Example 12 | A6 | OPP(20)/printing layer/adhesive layer/CPP(20) | 6 | 82 | 0.04 | 0.5% | Irgano×1010 | 230 | 200 | 6 | 10 | B12 | B | A | A | BB12 | C | A |
| Example 13 | A7 | OPP(20)/printing layer/adhesive layer/CPP(60) | 8 | 94 | 0.01 | 0.5% | Irgano×1010 | 230 | 200 | 2 | 3 | B13 | A | A | A | BB13 | A | A |
| Example 14 | A8 | OPP(20)/printing layer/PP resin layer (15)/CPP(30) | 6 | 96 | 0.01 | 0.5% | Irgano×1010 | 230 | 200 | 2 | 3 | B14 | A | A | A | BB14 | A | A |
| Example 15 | A9 | Printing layer/OPP(20)/adhesive layer/CPP(30) | 7 | 90 | 0.02 | 0.5% | Irgano×1010 | 230 | 200 | 3 | 4 | B15 | A | A | A | BB15 | A | A |
| Example 16 | A10 | HDPE(20)/printing layer/adhesive layer/LLDPE(150) | 6 | 97 | 0.00 | 0.5% | Irgano×1010 | 230 | 200 | 4 | 7 | B16 | B | A | A | BB16 | B | A |
| Example 17 | A11 | LLDPE(40)/printing layer/adhesive layer/LLDPE(40) | 7 | 94 | 0.01 | 0.5% | Irgano×1010 | 230 | 200 | 3 | 4 | B17 | A | A | A | BB17 | A | A |
| Example 18 | A1 | OPP(20)/printing layer/adhesive layer/CPP(30) | 7 | 90 | 0.02 | 0.5% | Irgafos168 | 230 | 200 | 3 | 4 | B18 | A | A | A | BB18 | A | A |

| | | Laminate (A) | | | | | Antioxidant | Melting Temperature °C | Rotation number rpm | Initial Ejection Pressure Mpa | Ejection Pressure Over time Mpa | Recycled plastic immediately after extrusion | | | | Recycled plastic after extrusion over time | | |
| | | Structure | MFR | Olefin content % | Chlorine Content % | Water content (%) | | | | | | Recycled Plastic (B) | Film foreign substance | Film burning | Bottle foaming | Recycled Plastic (B) | Foreign substance over time | Burning over time |
|---|---|---|---|---|---|---|---|---|---|---|---|---|---|---|---|---|---|---|
| Example 19 | A1 | OPP(20)/printing layer/adhesive layer/CPP(30) | 7 | 90 | 0.02 | 0.5% | Nocrac CD | 230 | 200 | 3 | 4 | B19 | A | B | A | BB19 | A | C |
| Example 20 | A1 | OPP(20)/printing layer/adhesive layer/CPP(30) | 7 | 90 | 0.02 | 0.5% | None | 230 | 200 | 3 | 4 | B20 | A | C | A | BB20 | A | C |
| Comparative Example 1 | A1 | OPP(20)/printing layer/adhesive layer/CPP(30) | 7 | 90 | 0.02 | 0.5% | Irganox1010 | 230 | 1100 | 5 | 19 | C1 | B | B | A | CC1 | D | B |
| Comparative Example 2 | S1 | NY(1 5)/printing layer/adhesive layer/CPP(60) | 6 | 71 | 0.01 | 0.5% | Irganox1010 | 230 | 200 | 6 | 20 | C2 | C | B | A | CC2 | D | B |
| Comparative Example 3 | A1 | OPP(20)/printing layer/adhesive layer/CPP(30) | 7 | 90 | 0.02 | 0.5% | Irganox1010 | 230 | 20 | 3 | 5 | C3 | A | C | A | CC3 | B | D |
| Comparative Example 4 | S1 | NY(1 5)/printing layer/adhesive layer/CPP(60) | 6 | 71 | 0.01 | 0.5% | Irganox1010 | 230 | 1100 | 7 | 22 | C4 | D | C | A | CC4 | D | D |

34

As may be seen from the above results, in Examples 1 to 23, which are embodiments of the present invention, all evaluation items for the recycled plastic immediately after extrusion and the recycled plastic after extrusion over time were at a practically usable level. On the other hand, in Comparative Examples 1 to 4, the rotation number during melting and kneading is outside the range specified in this application, or the polyolefin content in the laminate used as the raw material is outside the specified range. These Comparative Examples 1 to 4 clearly showed inferior results compared to the examples. In particular, in the case where the screw rotation number exceeds the upper limit specified in this application, it may be seen that there are many foreign substances in the film, and burning occurs during long-run operation, significantly reducing the quality of the recycled plastic.

**Claims**

1. A manufacturing method for recycled plastic, which is a method for manufacturing recycled plastic (B) from a plastic laminate (A) using an extrusion device having a melting and kneading unit in which a screw is disposed and an ejection unit, the manufacturing method comprising:

    supplying a plastic laminate (A) to the melting and kneading unit of the extrusion device;
    melting and kneading the plastic laminate (A) supplied to the melting and kneading unit with a screw rotation number 50 to 900 RPM to form a recycled resin composition (a); and
    ejecting the recycled resin composition (a) from the ejection unit and cooling the recycled resin composition (a) to obtain recycled plastic (B),
    wherein the plastic laminate (A) has at least a first resin layer, an adhesive layer and/or a printing layer, and a second resin layer, and a content of a polyolefin resin is 80 mass% or more with a total mass of the plastic laminate (A) as a reference.

2. The manufacturing method for recycled plastic according to claim 1, wherein an ejection of the recycled resin composition (a) is performed at an ejection pressure of 18 MPa or less.

3. The manufacturing method for recycled plastic according to claim 1 or 2, wherein the melting and kneading are performed in a presence of an antioxidant.

4. The manufacturing method for recycled plastic according to any one of claims 1 to 3, wherein a water content included in the plastic laminate (A) is 3 mass% or less with a total mass of the plastic laminate (A) as a reference.

5. The manufacturing method for recycled plastic according to any one of claims 1 to 4, wherein the adhesive layer contains a reaction product of a reactive urethane adhesive composed of a polyisocyanate and a polyol.

6. The manufacturing method for recycled plastic according to any one of claims 1 to 5, wherein a chlorine content ratio in the plastic laminate (A) is 0.3 mass% or less with a total mass of the plastic laminate (A) as a reference.

7. The manufacturing method for recycled plastic according to any one of claims 1 to 6, wherein a melt mass flow rate of the plastic laminate (A) is 0.5 to 15 g/10 min.

8. The manufacturing method for recycled plastic according to any one of claims 1 to 7, wherein the printing layer contains a pigment and a binder resin, and a chlorine content ratio in the binder resin is 5 mass% or less with a total mass of the binder resin as a reference.

9. The manufacturing method for recycled plastic according to claim 8, wherein a content ratio of a pigment in the printing layer is 30 mass% or less with a total mass of the printing layer as a reference.

10. The manufacturing method for recycled plastic according to any one of claims 1 to 9, wherein a polyolefin resin contained in the plastic laminate (A) contains at least one selected from a group consisting of polyethylene resin and polypropylene resin.

11. The manufacturing method for recycled plastic according to any one of claims 1 to 10, wherein the plastic laminate (A) further comprises a barrier layer.

12. A manufacturing method for recycled plastic molded article, comprising:

manufacturing a recycled plastic by a manufacturing method for recycled plastic according to any one of claims 1 to 11; and

molding and processing the recycled plastic.

## INTERNATIONAL SEARCH REPORT

| | International application No. |
|---|---|
| | **PCT/JP2022/032273** |

| A. | CLASSIFICATION OF SUBJECT MATTER |
|---|---|

**B29C 48/275**(2019.01)i
FI:  B29C48/275

According to International Patent Classification (IPC) or to both national classification and IPC

| B. | FIELDS SEARCHED |
|---|---|

Minimum documentation searched (classification system followed by classification symbols)

B29C48/275

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

| C. | DOCUMENTS CONSIDERED TO BE RELEVANT |
|---|---|

| Category* | Citation of document, with indication, where appropriate, of the relevant passages | Relevant to claim No. |
|---|---|---|
| Y | JP 2020-196808 A (TOYO INK SC HOLDINGS CO LTD) 10 December 2020 (2020-12-10) paragraphs [0018], [0036]-[0047] | 1-12 |
| Y | JP 2011-105882 A (KOHJIN CO LTD) 02 June 2011 (2011-06-02) paragraphs [0011]-[0027] | 1-12 |

☐ Further documents are listed in the continuation of Box C.    ☑ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **27 September 2022** | **04 October 2022** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

**INTERNATIONAL SEARCH REPORT**
Information on patent family members

International application No.

**PCT/JP2022/032273**

| Patent document cited in search report | | | Publication date (day/month/year) | Patent family member(s) | Publication date (day/month/year) |
|---|---|---|---|---|---|
| JP | 2020-196808 | A | 10 December 2020 | (Family: none) | |
| JP | 2011-105882 | A | 02 June 2011 | (Family: none) | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2014019003 A
- JP 2001031899 A
- JP 2020196855 A
- JP 2017148997 A